# EUROPEAN PATENT APPLICATION

(11) **EP 4 782 932 A1**
(43) Date of publication of application: **29.07.2026**
(21) Application number: 25222634.5
(22) Date of filing: 11.12.2025
(51) Int. Cl.: G03G 15/20

(54) **FIXING DEVICE AND IMAGE FORMING APPARATUS**

(30) Priority: 24.01.2025 JP 2025010973
(71) Applicant: FUJIFILM Business Innovation Corp., Minato-ku Tokyo (JP)
(72) Inventor: OMORI, Kenji, Ebina-shi, Kanagawa (JP); SEKO, Masayuki, Ebina-shi, Kanagawa (JP); KINUTA, Yasuhiko, Ebina-shi, Kanagawa (JP); KOMURO, Hitoshi, Ebina-shi, Kanagawa (JP); GOTOH, Yasutaka, Yokohama-shi, Kanagawa (JP); YAGI, Motoyuki, Yokohama-shi, Kanagawa (JP)
(74) Representative: Becker Kurig & Partner Patentanwälte mbB

(57) **Abstract**

A fixing device includes a heating roll, a pressurizing belt that is disposed in contact with the heating roll and has a surface layer that is a cured product of a composition containing a compound represented by Formula 1, a pressing member that is disposed on an inner peripheral surface of the pressurizing belt and presses the pressurizing belt against the heating roll from the inner peripheral surface of the pressurizing belt, a sliding member that is interposed between the inner peripheral surface of the pressurizing belt and the pressing member, and a lubricant that is interposed between the inner peripheral surface of the pressurizing belt and the sliding member,

(R¹₃SiO_{1/2})ₐ(R¹₂SiO_{2/2})_{b}(R¹SiO_{3/2})_{c}(SiO_{4/2})ₐ(R²O_{1/2})ₑ Formula 1,

(in Formula 1,
R¹ represents a hydrogen atom, an alkyl group, an alkenyl group, an alkynyl group, an aralkyl group, an aryl group, a group represented by -C(=O)-CR³₃, or a monovalent organic group having a reactive group, provided that a plurality of R¹'s may be the same or different from each other,
R² represents a hydrogen atom or an alkyl group, provided that a plurality of R²'s may be the same or different from each other,
R³ represents a hydrogen atom, a methyl group, or an ethyl group, provided that a plurality of R³'s may be the same or different from each other,
the monovalent organic group may be substituted with a halogen atom, a hydroxy group, an alkoxy group, an aryloxy group, an aralkyloxy group, or an oxy group,
the alkyl group, the alkenyl group, the alkynyl group, the aralkyl group, and the aryl group may have a substituent, and
a, b, d, and e each independently represent 0 or more and 1 or less, c represents more than 0 and 1 or less, and a + b + c + d + e = 1).

## Description

### BACKGROUND OF THE INVENTION

### (i) Field of the Invention

The present invention relates to a fixing device and an image forming apparatus.

### (ii) Description of Related Art

For example, JP2617858B discloses "elastic body formed of an addition-type silicone rubber elastic material, in which the addition-type silicone rubber elastic material is a cured product of a polysiloxane mixture containing at least (a) a vinyl group-terminated linear dimethylpolysiloxane having a viscosity at 25 °C of 80,000 poise or less, and (b) a resinous organopolysiloxane having a viscosity at 25 °C of 10 poise or more, that contains a block copolymer having two or more vinyl groups and having, within the same molecule, a resin segment containing at least one of tetrafunctional or trifunctional siloxane units and a linear oil segment having at least 100 consecutive difunctional structural units.

### SUMMARY OF THE INVENTION

An object of the present disclosure is to provide a fixing device that suppresses both image shift and paper wrinkles due to paper slip on a fixing surface, as compared with a case where "a coefficient µ1 of dynamic friction between a surface of a heating roll and a surface of paper on a side on which a toner image is fixed and a coefficient µ2 of dynamic friction between a back surface of the paper and an outer peripheral surface of a pressurizing belt are µ1 = µ2 or µ1 < µ2" or a case where "a surface layer of the pressurizing belt is a fluororesin layer".

Specific methods for achieving the above-described object include the following aspects.
<1> According to a first aspect of the present disclosure, there is provided a fixing device including:
   a heating roll;
   a pressurizing belt that is disposed in contact with the heating roll and has a surface layer that is a cured product of a composition containing a compound represented by Formula 1;
   a pressing member that is disposed on an inner peripheral surface of the pressurizing belt and presses the pressurizing belt against the heating roll from the inner peripheral surface of the pressurizing belt;
   a sliding member that is interposed between the inner peripheral surface of the pressurizing belt and the pressing member; and
   a lubricant that is interposed between the inner peripheral surface of the pressurizing belt and the sliding member,

      (R¹₃SiO_{1/2})ₐ(R¹₂SiO_{2/2})_{b}(R¹SiO_{3/2})_{c}(SiO_{4/2})_{d}(R²O_{1/2})ₑ Formula 1,

      (in Formula 1,
   R¹ represents a hydrogen atom, an alkyl group, an alkenyl group, an alkynyl group, an aralkyl group, an aryl group, a group represented by -C(=O)-CR³₃, or a monovalent organic group having a reactive group, provided that a plurality of R¹'s may be the same or different from each other,
   R² represents a hydrogen atom or an alkyl group, provided that a plurality of R²'s may be the same or different from each other,
   R³ represents a hydrogen atom, a methyl group, or an ethyl group, provided that a plurality of R³'s may be the same or different from each other,
   the monovalent organic group may be substituted with a halogen atom, a hydroxy group, an alkoxy group, an aryloxy group, an aralkyloxy group, or an oxy group,
   the alkyl group, the alkenyl group, the alkynyl group, the aralkyl group, and the aryl group may have a substituent, and
   a, b, d, and e each independently represent 0 or more and 1 or less, c represents more than 0 and 1 or less, and a + b + c + d + e = 1).
<2> According to a second aspect of the present disclosure, there is provided the fixing device according to <1>,
   in which a coefficient µ1 of dynamic friction between a surface of the heating roll and a surface of paper on a side on which a toner image is fixed and a coefficient µ2 of dynamic friction between a back surface of the paper and an outer peripheral surface of the pressurizing belt may satisfy a relationship of µ1 > µ2.
<3> According to a third aspect of the present disclosure, there is provided the fixing device according to <2>,
   in which a difference Δµ (µ1 - µ2) between the coefficient µ1 of dynamic friction and the coefficient µ2 of dynamic friction may be 0.1 or more and 1.0 or less.
<4> According to a fourth aspect of the present disclosure, there is provided a fixing device including:
   a heating roll;
   a pressurizing belt that is disposed in contact with the heating roll and has a surface layer that is a cured product of a composition containing a silsesquioxane compound;
   a pressing member that is disposed on an inner peripheral surface of the pressurizing belt and presses the pressurizing belt against the heating roll from the inner peripheral surface of the pressurizing belt;
   a sliding member that is interposed between the inner peripheral surface of the pressurizing belt and the pressing member; and
   a lubricant that is interposed between the inner peripheral surface of the pressurizing belt and the sliding member,
   in which a coefficient µ1 of dynamic friction between a surface of the heating roll and a surface of paper on a side on which a toner image is fixed and a coefficient µ2 of dynamic friction between a back surface of the paper and an outer peripheral surface of the pressurizing belt satisfy a relationship of µ1 > µ2.
<5> According to a fifth aspect of the present disclosure, there is provided the fixing device according to <3> or <4>,
   in which a difference Δµ (µ1 - µ2) between the coefficient µ1 of dynamic friction and the coefficient µ2 of dynamic friction may be 0.20 or more and 0.8 or less.
<6> According to a sixth aspect of the present disclosure, there is provided the fixing device according to <5>,
   in which the difference Δµ (µ1 - µ2) between the coefficient µ1 of dynamic friction and the coefficient µ2 of dynamic friction may be 0.30 or more and 0.60 or less.
<7> According to a seventh aspect of the present disclosure, there is provided the fixing device according to any one of claims <2> to <6>,
   in which the coefficient µ1 of dynamic friction may be 0.4 or more and 0.9 or less.
<8> According to an eighth aspect of the present disclosure, there is provided the fixing device according to any one of <2> to <7>,
   in which the coefficient µ2 of dynamic friction may be 0.1 or more and 0.7 or less.
<9> According to a ninth aspect of the present disclosure, there is provided the fixing device according to any one of <4> to <8>,
   in which the silsesquioxane compound may include a compound represented by Formula 1,

      (R¹₃SiO_{1/2})ₐ(R¹₂SiO_{2/2})_{b}(R¹SiO_{3/2})_{c}(SiO_{4/2})_{d}(R²O_{1/2})ₑ Formula 1,

      (in Formula 1,
   R¹ represents a hydrogen atom, an alkyl group, an alkenyl group, an alkynyl group, an aralkyl group, an aryl group, a group represented by -C(=O)-CR³₃, or a monovalent organic group having a reactive group, provided that a plurality of R¹'s may be the same or different from each other,
   R² represents a hydrogen atom or an alkyl group, provided that a plurality of R²'s may be the same or different from each other,
   R³ represents a hydrogen atom, a methyl group, or an ethyl group, provided that a plurality of R³'s may be the same or different from each other,
   the monovalent organic group may be substituted with a halogen atom, a hydroxy group, an alkoxy group, an aryloxy group, an aralkyloxy group, or an oxy group,
   the alkyl group, the alkenyl group, the alkynyl group, the aralkyl group, and the aryl group may have a substituent, and
   a, b, d, and e each independently represent 0 or more and 1 or less, c represents more than 0 and 1 or less, and a + b + c + d + e = 1).
<10> According to a tenth aspect of the present disclosure, there is provided the fixing device according to any one of <1> to <9>,
   in which a tensile elastic modulus of the surface layer of the pressurizing belt at 150°C may be 100 Mpa or more.
<11> According to an eleventh aspect of the present disclosure, there is provided the fixing device according to any one of <1> to <10>,
   in which a tensile elastic modulus of the surface layer of the pressurizing belt at 150°C may be 1,000 Mpa or more and 3,500 Mpa or less.
<12> According to a twelfth aspect of the present disclosure, there is provided the fixing device according to any one of <1> to <11>,
   in which a surface roughness Ra of the surface layer of the pressurizing belt may be 0.90 µm or less.
<13> According to a thirteenth aspect of the present disclosure, there is provided an image forming apparatus including:
   an image holder;
   a charging device that charges a surface of the image holder;
   an electrostatic latent image forming device that forms an electrostatic latent image on the charged surface of the image holder;
   a developing device that accommodates a developer containing a toner and develops the electrostatic latent image formed on the surface of the image holder with the developer to form a toner image;
   a transfer device that transfers the toner image onto a surface of a recording medium; and
   the fixing device according to any one of <1> to <12>, that fixes the toner image on the surface of the recording medium.

According to <1> or <9>, there is provided a fixing device that suppresses both image shift and paper wrinkles due to paper slip on a fixing surface, as compared with a case where the surface layer of the pressurizing belt is a fluororesin layer.

According to <2>, there is provided a fixing device that suppresses both image shift and paper wrinkles due to paper slip on a fixing surface, as compared with a case where the coefficient µ1 of dynamic friction between the surface of the heating roll and a surface of paper on a side on which a toner image is fixed and the coefficient µ2 of dynamic friction between a back surface of the paper and an outer peripheral surface of the pressurizing belt satisfy a relationship of µ1 = µ2 or µ1 < µ2.

According to <3>, there is provided a fixing device that suppresses both image shift and paper wrinkles due to paper slip on a fixing surface, as compared with a case where the value of the difference Δµ (µ1 - µ2) between the coefficient µ1 of dynamic friction and the coefficient µ2 of dynamic friction is less than 0.1 or more than 1.0.

According to <4>, there is provided a fixing device that suppresses both image shift and paper wrinkles due to paper slip on a fixing surface, as compared with a case where the coefficient µ1 of dynamic friction between the surface of the heating roll and a surface of paper on a side on which a toner image is fixed and the coefficient µ2 of dynamic friction between a back surface of the paper and an outer peripheral surface of the pressurizing belt satisfy a relationship of µ1 = µ2 or µ1 < µ2.

According to <5>, there is provided a fixing device that suppresses both image shift and paper wrinkles due to paper slip on a fixing surface, as compared with a case where the value of the difference Δµ (µ1 - µ2) between the coefficient µ1 of dynamic friction and the coefficient µ2 of dynamic friction is less than 0.20 or more than 0.80.

According to <6>, there is provided a fixing device that suppresses both image shift and paper wrinkles due to paper slip on a fixing surface, as compared with a case where the value of the difference Δµ (µ1 - µ2) between the coefficient µ1 of dynamic friction and the coefficient µ2 of dynamic friction is less than 0.30 or more than 0.60.

According to <7>, there is provided a fixing device that suppresses both image shift and paper wrinkles due to paper slip on a fixing surface, as compared with a case where the coefficient µ1 of dynamic friction is less than 0.4 or more than 0.9.

According to <8>, there is provided a fixing device that suppresses both image shift and paper wrinkles due to paper slip on a fixing surface, as compared with a case where the coefficient µ2 of dynamic friction is less than 0.1 or more than 0.7.

According to <10>, there is provided a fixing device that suppresses both image shift and paper wrinkles due to paper slip on a fixing surface, as compared with a case where the tensile elastic modulus of the surface layer of the pressurizing belt at 150°C is less than 100 Mpa.

According to <11>, there is provided a fixing device that suppresses both image shift and paper wrinkles due to paper slip on a fixing surface, as compared with a case where the tensile elastic modulus of the surface layer of the pressurizing belt at 150°C is less than 1,000 Mpa or more than 3,500 Mpa.

According to <12>, there is provided a fixing device that suppresses both image shift and paper wrinkles due to paper slip on a fixing surface, as compared with a case where the surface roughness Ra of the surface layer of the pressurizing belt is more than 0.90 µm.

According to <13>, there is provided a fixing device that suppresses both image shift and paper wrinkles due to paper slip on a fixing surface, as compared with a case where "the surface layer of the pressurizing belt is a fluororesin layer" or a case where "the coefficient µ1 of dynamic friction between the surface of the heating roll and a surface of paper on a side on which a toner image is fixed and the coefficient µ2 of dynamic friction between a back surface of the paper and an outer peripheral surface of the pressurizing belt satisfy a relationship of µ1 = µ2 or µ1 < µ2".

### BRIEF DESCRIPTION OF THE DRAWINGS

Exemplary embodiment(s) of the present invention will be described in detail based on the following figures, wherein:
FIG. 1 is a view schematically showing a configuration of an example of the image forming apparatus according to the present exemplary embodiment; and
FIG. 2 is a view schematically showing an example of the fixing device according to the present exemplary embodiment.

### DETAILED DESCRIPTION OF THE INVENTION

Hereinafter, exemplary embodiments of the present disclosure will be described. The following descriptions and examples merely illustrate the exemplary embodiments, and do not limit the scope of the invention.

Regarding the numerical ranges described in stages in the present specification, the upper limit value or lower limit value of a numerical range may be replaced with the upper limit value or lower limit value of another numerical range described in stages. In addition, in the present specification, the upper limit value or lower limit value of a numerical range may be replaced with values described in examples.

Each component may include a plurality of kinds of corresponding substances.

In a case where the amount of each component in a composition is mentioned, and there are two or more kinds of substances corresponding to each component in the composition, unless otherwise specified, the amount of each component means the total amount of two or more kinds of the substances present in the composition.

In a case where the exemplary embodiments are described with reference to the drawings, members having substantially the identical function are marked with the same reference numeral throughout all the drawings such that the members will not be redundantly described.

### <Fixing Device and Image Forming Apparatus>

The fixing device according to the first exemplary embodiment is a fixing device including a heating roll, a pressurizing belt that is disposed in contact with the heating roll and has a surface layer that is a cured product of a composition containing a compound represented by Formula 1, a pressing member that is disposed on an inner peripheral surface of the pressurizing belt and presses the pressurizing belt against the heating roll from the inner peripheral surface of the pressurizing belt, a sliding member that is interposed between the inner peripheral surface of the pressurizing belt and the pressing member, and a lubricant that is interposed between the inner peripheral surface of the pressurizing belt and the sliding member,

(R¹₃SiO_{1/2})ₐ(R¹₂SiO_{2/2})_{b}(R¹SiO_{3/2})_{c}(SiO_{4/2})_{d}(R²O_{1/2})ₑ Formula 1,

(in Formula 1,
R¹ represents a hydrogen atom, an alkyl group, an alkenyl group, an alkynyl group, an aralkyl group, an aryl group, a group represented by -C(=O)-CR³₃, or a monovalent organic group having a reactive group, provided that a plurality of R¹'s may be the same or different from each other,
R² represents a hydrogen atom or an alkyl group, provided that a plurality of R²'s may be the same or different from each other,
R³ represents a hydrogen atom, a methyl group, or an ethyl group, provided that a plurality of R³'s may be the same or different from each other,
the monovalent organic group may be substituted with a halogen atom, a hydroxy group, an alkoxy group, an aryloxy group, an aralkyloxy group, or an oxy group,
the alkyl group, the alkenyl group, the alkynyl group, the aralkyl group, and the aryl group may have a substituent, and
a, b, d, and e each independently represent 0 or more and 1 or less, c represents more than 0 and 1 or less, and a + b + c + d + e = 1).

The fixing device according to the second exemplary embodiment is a fixing device including a heating roll, a pressurizing belt that is disposed in contact with the heating roll and has a surface layer that is a cured product of a composition containing a silsesquioxane compound, a pressing member that is disposed on an inner peripheral surface of the pressurizing belt and presses the pressurizing belt against the heating roll from the inner peripheral surface of the pressurizing belt, a sliding member that is interposed between the inner peripheral surface of the pressurizing belt and the pressing member, and a lubricant that is interposed between the inner peripheral surface of the pressurizing belt and the sliding member, in which a coefficient µ1 of dynamic friction between a surface of the heating roll and a surface of paper on a side on which a toner image is fixed and a coefficient µ2 of dynamic friction between a back surface of the paper and an outer peripheral surface of the pressurizing belt satisfy a relationship of µ1 > µ2.

Hereinafter, matters common to the first exemplary embodiment and the second exemplary embodiment will be referred to as the present exemplary embodiment.

Hereinafter, the "fixing device including a heating roll, a pressurizing belt that is disposed in contact with the heating roll and has a surface layer, a pressing member that is disposed on an inner peripheral surface of the pressurizing belt and presses the pressurizing belt against the heating roll from the inner peripheral surface of the pressurizing belt, a sliding member that is interposed between the inner peripheral surface of the pressurizing belt and the pressing member, and a lubricant that is interposed between the inner peripheral surface of the pressurizing belt and the sliding member" is referred to as a specific fixing device.

The image forming apparatus according to the present exemplary embodiment includes an image holder, a latent image forming device that forms a latent image on a surface of the image holder, a developing device that develops the latent image into a toner image using a developer, a transfer device that transfers the toner image developed onto a recording medium, and a fixing device that fixes the toner image on the recording medium. In the image forming apparatus according to the present exemplary embodiment, the above-described fixing device according to the present exemplary embodiment is applied.

In the related art, in order to form an image on paper in an electrophotographic image forming apparatus such as a printer, a copier, and a facsimile, a toner image is transferred onto the paper, and then the paper on which the toner image is transferred is heated and pressurized by a fixing device to fix the toner image on the paper surface.

In the related art, various types of devices are proposed as the fixing device, and the above-described specific fixing device is known as one of the devices. In the specific fixing device, from the viewpoint of maintaining abrasion resistance of the pressurizing belt, a pressurizing belt containing a fluororesin in the surface layer is proposed. However, in a case where the pressurizing belt containing a fluororesin in the surface layer is used, as the image is fixed at a high temperature (for example, 150°C), since the surface layer has low slipperiness, a dynamic frictional force on the pressurizing side is likely to be larger than a dynamic frictional force on the fixing side. Therefore, a transport timing of the paper transported to a position where the toner image is to be transferred is likely to be delayed with respect to a transport timing of the toner image transported to the transfer position by the pressurizing belt. Accordingly, image shift may occur on the paper. As a result, the paper is likely to slip on the fixing surface, and paper wrinkles or image shift tend to occur.

On the other hand, the fixing device according to the present exemplary embodiment has the above-described configuration, and thus suppresses both image shift and paper wrinkles due to paper slip on the fixing surface. The mechanism is not necessarily clear, but is presumed as follows.

In the fixing device according to the first exemplary embodiment, the surface layer of the pressurizing belt contains the compound represented by Formula 1. The compound represented by Formula 1 has intermediate physical properties between inorganic silica and organic silicone, due to structural characteristics thereof. Therefore, the surface layer containing the compound represented by Formula 1 has both inorganic characteristics such as heat resistance and hardness and organic characteristics such as flexibility and workability. Accordingly, even in a case of fixing the image at a high temperature (for example, 150°C), the amount of deformation of the surface layer of the pressurizing belt is suppressed to be small, and a grip force between the surface layer and the paper is reduced. As a result, a frictional force on the pressurizing side is lower than a frictional force on the fixing side, and thus the slip on the fixing surface can be prevented, and the paper wrinkles or the image shift can be prevented.

In the fixing device according to the second exemplary embodiment, a coefficient µ1 of dynamic friction between a surface of the heating roll and a surface of paper on a side on which a toner image is fixed and a coefficient µ2 of dynamic friction between a back surface of the paper and an outer peripheral surface of the pressurizing belt satisfy a relationship of µ1 > µ2. Therefore, even in a case of fixing the image, the amount of deformation of the surface layer of the pressurizing belt is suppressed to be small, and a grip force between the surface layer and the paper is reduced. As a result, a frictional force on the pressurizing side is lower than a frictional force on the fixing side, and thus the slip on the fixing surface can be prevented, and the paper wrinkles or the image shift can be prevented.

### [Coefficient of Dynamic Friction]

In the fixing device according to the first exemplary embodiment, for example, it is preferable that a coefficient µ1 of dynamic friction between a surface of the heating roll and a surface of paper on a side on which a toner image is fixed and a coefficient µ2 of dynamic friction between a back surface of the paper and an outer peripheral surface of the pressurizing belt satisfy a relationship of µ1 > µ2.

In the fixing device according to the second exemplary embodiment, a coefficient µ1 of dynamic friction between a surface of the heating roll and a surface of paper on a side on which a toner image is fixed and a coefficient µ2 of dynamic friction between a back surface of the paper and an outer peripheral surface of the pressurizing belt satisfy a relationship of µ1 > µ2.

As the relationship of µ1 > µ2 is satisfied, in a case of fixing the image at a high temperature, the amount of deformation of the surface layer of the pressurizing belt is suppressed to be small, and the grip force between the surface layer and the paper is further reduced. As a result, the frictional force on the pressurizing side is lower than the frictional force on the fixing side, and thus the slip on the fixing surface can be prevented, and the paper wrinkles or the image shift can be further prevented.

The back surface of the paper refers to a surface of the paper on a side in contact with the outer peripheral surface of the pressurizing belt.

Hereinafter, aspects of the coefficient of dynamic friction, common to both the first exemplary embodiment and the second exemplary embodiment, will be described.

In the fixing device according to the present exemplary embodiment, a value of a difference Δµ (µ1 - µ2) between the coefficient µ1 of dynamic friction and the coefficient µ2 of dynamic friction is, for example, preferably 0.10 or more and 1.00 or less, more preferably 0.20 or more and 0.80 or less, and still more preferably 0.30 or more and 0.60 or less.

In a case where the difference Δµ (µ1 - µ2) is 0.30 or more and 0.60 or less, in a case of fixing the image at a high temperature, the amount of deformation of the surface layer of the pressurizing belt is sufficiently suppressed to be small, and the grip force between the surface layer and the paper is further reduced.

The coefficient µ1 of dynamic friction is, for example, preferably 0.30 or more and 0.90 or less, more preferably 0.40 or more and 0.80 or less, and still more preferably 0.50 or more and 0.70 or less.

In a case where the coefficient µ1 of dynamic friction is 0.30 or more, in a case of fixing the image at a high temperature, the amount of deformation of the surface of the heating roll is sufficiently suppressed to be small, and the grip force between the surface of the heating roll and the paper is further reduced.

In a case where the coefficient µ1 of dynamic friction is 0.90 or less, in a case of fixing the image at a high temperature, the amount of deformation of the surface of the heating roll is sufficiently suppressed to be small, and the frictional force on the pressurizing side is suppressed to be larger than the frictional force on the fixing side.

The coefficient µ2 of dynamic friction is, for example, preferably 0.10 or more and 0.75 or less, more preferably 0.15 or more and 0.65 or less, and still more preferably 0.20 or more and 0.55 or less.

In a case where the coefficient µ2 of dynamic friction is 0.10 or more, in a case of fixing the image at a high temperature, the slipperiness of the surface layer of the pressurizing belt is suppressed from being excessively high, and the difference in frictional force between the fixing side and the pressurizing side is moderate. As a result, the slip on the fixing surface is further prevented.

In a case where the coefficient µ2 of dynamic friction is 0.75 or less, in a case of fixing the image at a high temperature, the amount of deformation of the surface layer of the pressurizing belt is sufficiently suppressed to be small, and the frictional force on the pressurizing side is suppressed to be larger than the frictional force on the fixing side.

A method of setting the coefficient µ1 of dynamic friction to be within the above-described range is not particularly limited, and examples thereof include a method of forming the surface of the heating roll into a layer containing a fluororesin, and a method of forming a layer in which a release oil is present on a surface of fluororubber.

A method of setting the coefficient µ2 of dynamic friction and the difference Δµ (µ1 - µ2) to be within the above-described ranges is not particularly limited, and examples thereof include a method of forming the surface layer of the pressurizing belt (that is, the outer peripheral surface in contact with the back surface of the paper) from a cured film of a composition containing a silsesquioxane compound (for example, more preferably the compound represented by Formula 1).

The coefficient µ1 of dynamic friction and the coefficient µ2 of dynamic friction are measured by the following method.

The measurement is performed according to JIS standard "Plastics-Film and Sheet-Friction coefficient test method" (JIS K7125 (1999)). That is, the coefficient of dynamic friction generated between a transparent protective film placed on a horizontal stage and a copy paper (in the present measuring method, "C2 paper, color/monochrome mixed paper, manufactured by FUJIFILM Business Innovation Corp.") fixed to a lower surface of a block-shaped weight is measured with a Hayden friction force measuring device. A frictional force in a case where a contact portion having an area of 40 cm² (63 mm × 63 mm) is pulled at a speed of 100 mm/min (1.67 mm/sec) under a load of 1.64 kPa (200 g) is measured, and the frictional force is divided by the vertical load by the weight to obtain the coefficient of dynamic friction. In the measurement of the friction coefficient, an average value of five measurements is taken because an error is usually generated.
(incidentally, in a case where the coefficient of dynamic friction is high and exceeds 0.9, a phenomenon in which a frictional force periodically fluctuates greatly, that is called a stick-slip phenomenon, is likely to occur, and it is difficult to measure the coefficient of dynamic friction)

The numerical values described in the present specification are measured by the above-described method.

Hereinafter, an example of the image forming apparatus and the fixing device according to the present exemplary embodiment will be described with reference to the drawings.

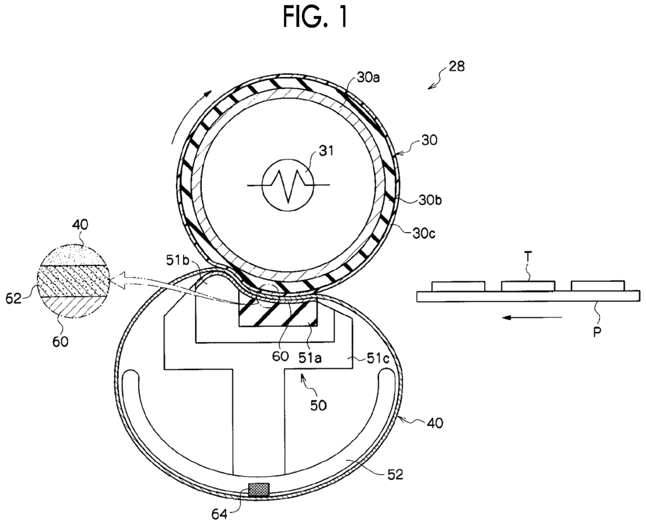

FIG. 1 is a view schematically showing an example of the image forming apparatus according to the present exemplary embodiment.

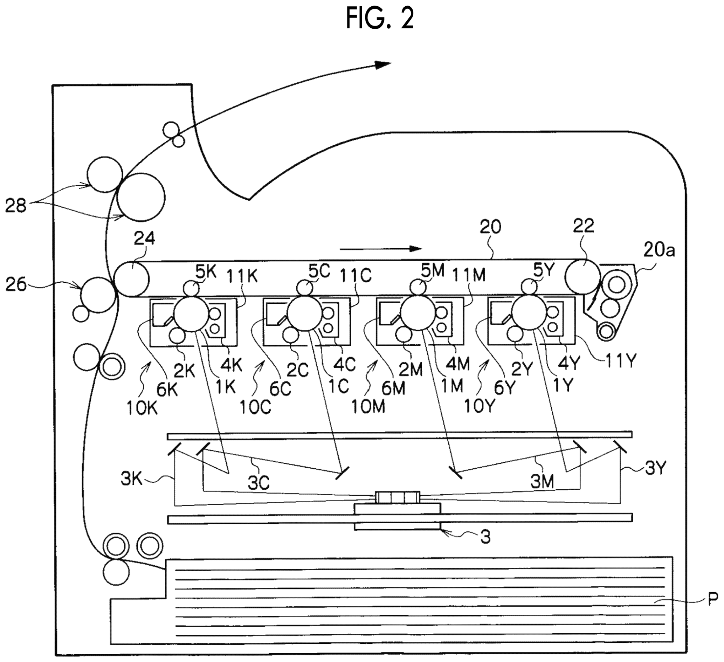

FIG. 2 is a view schematically showing an example of the fixing device according to the present exemplary embodiment.

### [Configuration of Image Forming Apparatus]

As shown in FIG. 1, an image forming apparatus 100 according to the present exemplary embodiment includes first to fourth process cartridges 10Y, 10M, 10C, and 10K (an example of image forming units) in an electrophotographic method that outputs an image of each of colors, yellow (Y), magenta (M), cyan (C), and black (K), based on color-separated image data. These process cartridges 10Y, 10M, 10C, and 10K are arranged to be separated from each other along an outer peripheral surface of an intermediate transfer belt 20. These process cartridges 10Y, 10M, 10C, and 10K are detachable from a body of the image forming apparatus.

The intermediate transfer belt 20 as an intermediate transfer body is provided above each of the process cartridges 10Y, 10M, 10C, and 10K (in FIG. 1) so that an outer peripheral surface thereof faces each process cartridge. The intermediate transfer belt 20 is wound around a drive roller 22 disposed apart from each other and a support roller 24 in contact with the inner peripheral surface of the intermediate transfer belt 20 to be disposed under application of a tension, and set to travel endlessly in a direction from the first process cartridge 10Y to the fourth process cartridge 10K.

The support roller 24 is pressed in a direction away from the drive roller 22 by an elastic member such as a spring (not shown), and a tension is applied to the intermediate transfer belt 20 wound between both the rollers. In addition, an intermediate transfer body cleaning device 20a facing the drive roller 22 is provided on the outer peripheral surface of the intermediate transfer belt 20.

Since the first to fourth process cartridges 10Y, 10M, 10C, and 10K have substantially the identical configuration, the first process cartridge 10Y forming a yellow image, disposed on the upstream side in the traveling direction of the intermediate transfer belt, will be described herein as a representative. Identical reference numerals marked with magenta (M), cyan (C), and black (K) instead of yellow (Y) are assigned to portions that are identical to the reference numerals in the first process cartridge 10Y, such that the description on the second to fourth process cartridges 10M, 10C, and 10K will not be repeated.

The first process cartridge 10Y has a photoreceptor 1Y that acts as an image holder. A charging roller (an example of the charging device) 2Y, a developing device 4Y, and a photoreceptor cleaning device 6Y are disposed in order around the photoreceptor 1Y. These devices are integrally configured in a housing 11Y (casing). Similarly, in the second to fourth process cartridges 10M, 10C, and 10K, the respective members are integrally configured in housings 11M, 11C, and 11K (casing).

Here, the charging roller 2Y is a charging roller that charges the surface of the photoreceptor 1Y to a predetermined potential. The developing device 4Y is a developing device that develops an electrostatic latent image by supplying the charged toner contained in the developer to the electrostatic latent image. The photoreceptor cleaning device 6Y is a photoreceptor cleaning device that removes the toner remaining on the surface of the photoreceptor 1Y after the primary transfer.

Together with the first process cartridge 10Y, a primary transfer roller 5Y (an example of a primary transfer device) that transfers the developed toner image onto the intermediate transfer belt 20, and an exposure device 3 that forms an electrostatic latent image by subjecting a charged surface to exposure with a laser beam 3Y based on a color-separated image signal are disposed to configure an image forming unit.

The charging roller 2Y and the exposure device 3 correspond to an example of the latent image forming device.

The primary transfer roller 5Y is disposed on the inner side of the intermediate transfer belt 20, at a position facing the photoreceptor 1Y. A bias power supply (not shown) that applies a primary transfer bias is connected to each of the primary transfer rollers 5Y, 5M, 5C, and 5K. Each bias power supply varies the transfer bias applied to each primary transfer roller under the control of a control unit (not shown).

### [Configuration of Fixing Device]

As shown in FIG. 2, a fixing device 28 includes a heating roll 30 and a pressurizing belt 40, and the heating roll 30 and the pressurizing belt 40 are provided to face each other. The pressurizing belt 40 is pressed against the heating roll 30 by a pressing pad 50 (an example of the pressing member) disposed inside the periphery of the pressurizing belt 40. The pressurizing belt 40 is in pressure contact with the heating roll 30 to form a contact portion. The pressurizing belt 40 is guided along a belt traveling guide 52, and is driven by receiving a driving force from the heating roll 30.

A sliding sheet 60 (an example of the sliding member) is interposed between the pressurizing belt 40 and the pressing pad 50. A lubricant 62 (an example of the lubricant) is interposed between the sliding sheet 60 and the inner peripheral surface of the pressurizing belt 40. The lubricant 62 is supplied onto the inner peripheral surface of the pressurizing belt 40 by, for example, a lubricant supply member 64 provided in a part of the belt traveling guide 52, and interposed between the sliding sheet 60 and the inner peripheral surface of the pressurizing belt 40.

Here, in FIG. 2, T represents a toner image.

### [Pressurizing Belt 40]

The pressurizing belt includes a surface layer.

The pressurizing belt 40 may be a monolayer body of the surface layer constituting the inner peripheral surface of the pressurizing belt 40; a laminate having a resin base material layer constituting the inner peripheral surface of the pressurizing belt 40, an elastic layer provided on the resin base material layer, and a surface layer provided on the elastic layer; or a laminate having a resin base material layer constituting the inner peripheral surface of the pressurizing belt 40 and a surface layer provided on the resin base material layer.

### (Surface Layer)

The surface layer in the first exemplary embodiment is a cured product of the composition containing the compound represented by Formula 1. In the first exemplary embodiment, the composition may further contain a silsesquioxane compound other than the compound represented by Formula 1.

The surface layer in the second exemplary embodiment is a cured product of a composition containing the silsesquioxane compound. In the second exemplary embodiment, from the viewpoint of further preventing the slip on the fixing surface by adjusting the frictional force on the pressurizing side to be lower than the frictional force on the fixing side, for example, the silsesquioxane compound preferably includes the compound represented by Formula 1.

### · Silsesquioxane Compound

The silsesquioxane compound is a general term for a compound having a constitutional unit 3 represented by Formula (R¹SiO_{3/2})ₙ. In the formula, R¹ represents an organic group, and n represents a positive number of 2 or more. A plurality of R¹'s present in the constitutional unit 3 may be the same organic group or different organic groups. The silsesquioxane compound may be used alone or in combination of two or more kinds thereof.

In the constitutional unit 3, examples of the organic group represented by R¹ include a polymerizable functional group, a hydroxyl group, a siloxy group, a hydrocarbon group, a hydrocarbon group in which one or a plurality of methylene groups are replaced with a carbonyl group, a hydrocarbon group in which one or a plurality of carbon atoms are replaced with a heteroatom (an oxygen atom, a nitrogen atom, or a sulfur atom), and a group obtained by combining these groups.

Examples of the siloxy group include a monoalkylsiloxy group, a dialkylsiloxy group, and a trialkylsiloxy group. Among the above, the siloxy group is, for example, preferably a dialkylsiloxy group or a trialkylsiloxy group, and more preferably a trialkylsiloxy group.

Examples of the hydrocarbon group include an aliphatic hydrocarbon group and an aromatic hydrocarbon group.

Among the above, the aliphatic hydrocarbon group is, for example, preferably a hydrocarbon group having 1 or more and 20 or less carbon atoms, and more preferably a hydrocarbon group having 1 or more and 15 or less carbon atoms. The aliphatic hydrocarbon group may be linear, branched, or alicyclic. The aliphatic hydrocarbon group may be substituted with a substituent such as a halogen atom, a hydroxyl group, an amino group, and an aryl group.

Examples of the aromatic hydrocarbon group include a phenyl group, a naphthyl group, and an anthracenyl group. Among the above, the aromatic hydrocarbon group is, for example, preferably an aromatic hydrocarbon group having 6 or more and 18 or less carbon atoms, and more preferably an aromatic hydrocarbon group having 6 or more and 14 or less carbon atoms. The aromatic hydrocarbon group may be substituted with a substituent such as a halogen atom, a hydroxyl group, an amino group, an alkyl group, and an alkoxy group.

Examples of the polymerizable functional group include the same aspect as a polymerizable functional group represented by R¹ in the compound represented by Formula 1, that will be described later.

A three-dimensional structure of the silsesquioxane compound may be any of a cage type, a ladder type, or a random structure. The cage-type silsesquioxane compound is a concept including both "incomplete cage type" in which a part of the silsesquioxane skeleton has a cage structure and "complete cage type" in which the entire silsesquioxane skeleton has a cage structure.

### · Compound Represented by Formula 1

The compound represented by Formula 1 is one of silsesquioxane compounds having various skeletal structures, in which a main chain skeleton consists of Si-O bonds. The compound represented by Formula 1 may be only one kind or two or more kinds.

(R¹₃SiO_{1/2})ₐ(R¹₂SiO_{2/2})_{b}(R¹SiO_{3/2})_{c}(SiO_{4/2})_{d}(R²O_{1/2})ₑ Formula 1

In Formula 1, R¹ represents a hydrogen atom, an alkyl group, an alkenyl group, an alkynyl group, an aralkyl group, an aryl group, a group represented by -C(=O)-CR³₃, or a monovalent organic group having a reactive group.
A plurality of R¹'s may be the same or different from each other.
R² represents a hydrogen atom or an alkyl group, provided that a plurality of R²'s may be the same or different from each other.
R³ represents a hydrogen atom, a methyl group, or an ethyl group, provided that a plurality of R³'s may be the same or different from each other.

The monovalent organic group may be substituted with a halogen atom, a hydroxy group, an alkoxy group, an aryloxy group, an aralkyloxy group, or an oxy group, and the alkyl group, the alkenyl group, the alkynyl group, the aralkyl group, and the aryl group may have a substituent.

a, b, d, and e each independently represent 0 or more and 1 or less, c represents more than 0 and 1 or less, and a + b + c + d + e = 1. a, b, c, d, and e represent an average value of a proportion of the number of moles of each constitutional unit contained in one molecule of the compound represented by Formula 1.

The compound represented by Formula 1 has five constitutional units of "R¹₃SiO_{1/2}" (hereinafter, referred to as "constitutional unit 1"), "R¹₂SiO_{2/2}" (hereinafter, referred to as "constitutional unit 2"), "R¹SiO_{3/2}" (hereinafter, referred to as "constitutional unit 3"), "SiO_{4/2}" (hereinafter, referred to as "constitutional unit 4"), and "R¹O_{1/2}" (hereinafter, referred to as "constitutional unit 5").

Each of the constitutional unit 1 to the constitutional unit 5 in Formula 1 may be only one kind or two or more kinds. In addition, an arrangement order of the constitutional units is not limited to the arrangement order represented by Formula 1, and is not particularly limited.

The compound represented by Formula 1 includes at least the constitutional unit 3 (that is, the constitutional unit represented by "R¹SiO_{3/2}"). That is, in Formula 1, c is a positive number of more than 0 and 1 or less.

For example, the compound represented by Formula 1 preferably includes the constitutional unit 2 together with the constitutional unit 3. That is, in Formula 1, for example, it is preferable that b and c are each independently a positive number of more than 0 and 1 or less, and a, d, and e are 0 or a positive number in a range of a + b + c + d + e = 1.

The compound represented by Formula 1 may be composed of only the constitutional unit 3 (that is, c may be 1, and all of a, b, d, and e may be 0).

In Formula 1, the reactive group is, for example, preferably at least one selected from the group consisting of a (meth)acryloyl group, an oxetanyl group, an epoxy group, a methyl group, and a phenyl group; more preferably at least one selected from the group consisting of a polymerizable functional group, an aryl group, and an alkyl group; and still more preferably at least one selected from the group consisting of a (meth)acryloyl group, an oxetanyl group, an epoxy group, a methyl group, and a phenyl group.

A plurality of R¹'s in the constitutional units 1 to 3 in Formula 1 may be the same or different from each other.

### -Constitutional Unit 1-

The group represented by R¹ in the constitutional unit 1 (that is, the constitutional unit represented by "R¹₃SiO_{1/2}") is at least one selected from the group consisting of a hydrogen atom, an alkyl group, an alkenyl group, an alkynyl group, an aralkyl group, an aryl group, - C(=O)-CR³₃, and a monovalent organic group having a reactive group (hereinafter, also referred to as a "polymerizable functional group"). R¹ of the present constitutional unit is, for example, preferably at least one selected from the group consisting of a hydrogen atom, a polymerizable functional group, an aryl group, and an alkyl group; and more preferably at least one selected from the group consisting of a polymerizable functional group, an aryl group, and an alkyl group. A plurality of R¹'s in the present constitutional unit may be the same or different from each other.

R¹ of the present constitutional unit may be a hydrogen atom. In a case where R¹ is a hydrogen atom, for example, in a case where at least one of the present constitutional unit or another constitutional unit includes an organic group having 2 or more and 10 or less carbon atoms, that includes a carbon-carbon unsaturated bond capable of being hydrosilylated and is included in the polymerizable functional group (hereinafter, also simply referred to as an unsaturated organic group), a crosslinking reaction may occur between these units.

R¹ of the present constitutional unit may be an alkyl group. The alkyl group may be an aliphatic group or an alicyclic group, and may be linear or branched. The number of carbon atoms in the alkyl group is, for example, preferably 1 or more and 10 or less, more preferably 1 or more and 4 or less, still more preferably 1 or more and 2 or less, and particularly preferably 1, that is, a methyl group. Specific examples of the alkyl group having 1 or more and 10 or less carbon atoms include a methyl group, an ethyl group, a propyl group, a butyl group, a pentyl group, a hexyl group, a heptyl group, an octyl group, a nonyl group, and a decyl group.

R¹ of the present constitutional unit may be an alkenyl group. The alkenyl group may be an aliphatic group, an alicyclic group, or an aromatic group, and may be linear or branched. The number of carbon atoms in the alkenyl group is, for example, preferably 1 or more and 10 or less. Specific examples of the alkenyl group having 1 or more and 10 or less carbon atoms include an ethenyl (vinyl) group, an ortho-styryl group, a meta-styryl group, a para-styryl group, a 1-propenyl group, a 2-propenyl (allyl) group, a 1-butenyl group, a 1-pentenyl group, a 3-methyl-1-butenyl group, a phenylethenyl group, an allyl (2-propenyl) group, and an octenyl (7-octen-1-yl) group.

R¹ of the present constitutional unit may be an alkynyl group. The alkynyl group may be an aliphatic group, an alicyclic group, or an aromatic group, and may be linear or branched. The number of carbon atoms in the alkynyl group is, for example, preferably 1 or more and 10 or less. Specific examples of the alkynyl group include an ethynyl group, a 1-propynyl group, a 1-butynyl group, a 1-pentynyl group, a 3-methyl-1-butynyl group, and a phenylbutynyl group.

R¹ of the present constitutional unit may be an aryl group. The number of carbon atoms in the aryl group is, for example, preferably 6 or more and 20 or less, more preferably 6 or more and 10 or less, and still more preferably 6, that is, a phenyl group. Examples of the aryl group having 6 or more and 20 or less carbon atoms include a phenyl group, a 1-naphthyl group, and a 2-naphthyl group.

R¹ of the present constitutional unit may be an aralkyl group. The number of carbon atoms in the aralkyl group is, for example, preferably 7 or more and 20 or less, and more preferably 7 or more and 10 or less. Examples of the aralkyl group having 7 or more and 20 or less carbon atoms include a phenylalkyl group such as a benzyl group.

R¹ of the present constitutional unit may be -C(=O)-CR³₃. R³ represents a hydrogen atom, a methyl group, or an ethyl group. R³ is, for example, preferably a methyl group. In a case of a plurality of R³'s, the plurality of R³'s may be the same or different from each other.

R¹ of the present constitutional unit may be a monovalent organic group having a reactive group (polymerizable functional group). Examples of the polymerizable functional group include a polymerizable functional group that can be thermoset or photocured. The polymerizable functional group is not particularly limited, and examples thereof include a vinyl group, an allyl group, a styryl group, a methacryloyl group, an acryloyl group, an acryloyloxy group, a methacryloyloxy group, an α-methylstyryl group, a vinyl ether group, a vinyl ester group, an acrylamide group, a methacrylamide group, an N-vinyl amide group, a maleic acid ester group, a fumaric acid ester group, an N-substituted maleimide group, an isocyanate group, an oxetanyl group, and an epoxy group. Among these, as the polymerizable functional group, for example, a polymerizable functional group having a (meth)acryloyl group, an oxetanyl group, or an epoxy group is preferable. The polymerizable functional group may be further substituted with a halogen atom, a hydroxy group, an alkoxy group, an aryloxy group, an aralkyloxy group, or an oxy group.

As the polymerizable functional group having a (meth)acryloyl group, for example, a group represented by the following formula or a group including the group is preferable.

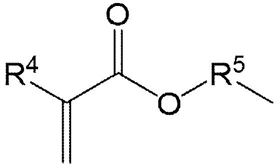

In the formula, R⁴ represents a hydrogen atom or a methyl group, and R⁵ represents an alkylene group having 1 or more and 10 or less carbon atoms. R⁴ is, for example, preferably an alkylene group having 2 or more and 10 or less carbon atoms.

The oxetanyl group is not particularly limited, and examples thereof include a (3-ethyl-3-oxetanyl)methoxy group and a (3-ethyl-3-oxetanyl)oxy group. As the polymerizable functional group having an oxetanyl group, for example, a group represented by the following formula or a group including the group is preferable.

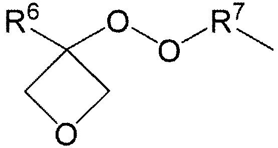

In the formula, R⁶ represents a hydrogen atom or an alkyl group having 1 or more and 6 or less carbon atoms, and R⁷ represents an alkylene group having 1 or more and 6 or less carbon atoms. R⁶ is, for example, preferably a hydrogen atom, a methyl group, an ethyl group, or the like, and more preferably an ethyl group. R⁷ is, for example, preferably an alkylene group having 2 or more and 6 or less carbon atoms, and more preferably a propylene group.

The polymerizable functional group having an epoxy group is not particularly limited, and examples thereof include an alkyl group having 1 or more and 10 or less carbon atoms, that is substituted with a glycidyloxy group, such as β-glycidyloxyethyl, γ-glycidyloxypropyl, and γ-glycidyloxybutyl; and an alkyl group having 5 or more and 10 or less carbon atoms, that is substituted with an oxirane group, such as a glycidyl group, a β-(3,4-epoxycyclohexyl)ethyl group, a γ-(3,4-epoxycyclohexyl)propyl group, a β-(3,4-epoxycycloheptyl)ethyl group, a 4-(3,4-epoxycyclohexyl)butyl group, and a 5-(3,4-epoxycyclohexyl)pentyl group.

The polymerizable functional group may be a functional group having a carbon-carbon double bond or a carbon-carbon triple bond, that can be hydrosilylated with a hydrogen atom (hydrosilyl group) bonded to a silicon atom. The unsaturated organic group can also function as the polymerizable functional group in a sense that the hydrogen atom in the hydrosilyl group polymerizes by a hydrosilylation reaction to form a hydrosilylated structural part. Specific examples of the unsaturated organic group include the above-described alkenyl group, alkynyl group, and the like. The unsaturated organic group is not particularly limited, and examples thereof include a vinyl group, an ortho-styryl group, a meta-styryl group, a para-styryl group, an acryloyl group, a methacryloyl group, an acryloxy group, a methacryloxy group, a 1-propenyl group, a 1-butenyl group, a 1-pentenyl group, a 3-methyl-1-butenyl group, a phenylethenyl group, an ethynyl group, a 1-propynyl group, a 1-butynyl group, a 1-pentynyl group, a 3-methyl-1-butynyl group, a phenylbutynyl group, an allyl(2-propenyl) group, and an octenyl (7-octen-1-yl) group. The unsaturated organic group is, for example, preferably a vinyl group, a para-styryl group, an allyl(2-propenyl) group, or an octenyl (7-octen-1-yl) group, and more preferably a vinyl group.

The compound represented by Formula 1 may include two or more kinds of the polymerizable functional groups in the entire molecule. In this case, all the polymerizable functional groups may be the same or different from each other. In addition, the plurality of polymerizable functional groups may be the same and may further include different polymerizable functional groups.

The alkyl group, the alkenyl group, the alkynyl group, the aralkyl group, the aryl group, -C(=O)-CR³₃, and the polymerizable functional group, represented by R¹, may have a substituent. Examples of the substituent include at least one or more of a halogen atom such as a fluorine atom, a chlorine atom, a bromine atom, and an iodine atom; an alkyl group such as a methyl group, an ethyl group, a n-propyl group, an isopropyl group, a n-butyl group, a s-butyl group, an isobutyl group, a tert-butyl group, a n-pentyl group, a n-hexyl group, a n-heptyl group, a n-octyl group, and an isooctyl group; a hydroxy group; an alkoxy group; an aryloxy group; an aralkyloxy group; an oxy group (=O); a cyano group; a protected hydroxyl group; and the like.

A protecting group of the hydroxyl group in the protected hydroxyl group is not particularly limited, and a known hydroxyl group-protecting group is used. For example, examples of the protecting group include an acyl-based protecting group represented by - C(=O)R (in the formula, R represents an alkyl group having 1 or more and 6 or less carbon atoms, such as a methyl group, an ethyl group, a n-propyl group, an isopropyl group, a n-butyl group, an isobutyl group, a s-butyl group, a tert-butyl group, and an n-pentyl group, or a phenyl group having or not having a substituent; examples of the substituent of the phenyl group having a substituent include an alkyl group such as a methyl group, an ethyl group, a n-propyl group, an isopropyl group, a n-butyl group, a s-butyl group, an isobutyl group, a tert-butyl group, a n-pentyl group, a n-hexyl group, a n-heptyl group, a n-octyl group, and an isooctyl group, a halogen atom such as a fluorine atom, a chlorine atom, and a bromine atom, an alkoxy group such as a methoxy group and an ethoxy group, and the like); a silyl-based protecting group such as a trimethylsilyl group, a triethylsilyl group, a tert-butyldimethylsilyl group, and a tert-butyldiphenylsilyl group; an acetal-based protecting group such as a methoxymethyl group, a methoxyethoxymethyl group, a 1-ethoxyethyl group, a tetrahydropyran-2-yl group, and a tetrahydrofuran-2-yl group; an alkoxycarbonyl-based protecting group such as a t-butoxycarbonyl group; and an ether-based protecting group such as a methyl group, an ethyl group, a tert-butyl group, an octyl group, an allyl group, a triphenylmethyl group, a benzyl group, a p-methoxybenzyl group, a fluorenyl group, a trityl group, and a benzhydryl group.

The compound represented by Formula 1 includes one kind or two or more kinds of the present constitutional units. In the compound represented by Formula 1, for example, it is preferable that at least a part of the present constitutional units has all of the three R¹'s being alkyl groups, and it is preferable that all of the present constitutional units have all of the three R¹'s being alkyl groups.

a, that is a proportion of the number of moles of the present constitutional unit in the compound represented by Formula 1, is a positive number of 0 or more and 1 or less. The lower limit value of a is not particularly limited, but is, for example, preferably 0.25 or more, more preferably 0.3 or more, and still more preferably 0.35 or more. The lower limit value of a may be 0.4 or more. The upper limit value of a is not particularly limited, but is, for example, preferably 0.5 or less, and more preferably 0.45 or less.

### -Constitutional Unit 2-

R¹ of the constitutional unit 2 (that is, the constitutional unit represented by "R¹₂SiO_{2/2}") is at least one selected from the group consisting of a hydrogen atom, an alkyl group, an alkenyl group, an alkynyl group, an aryl group, an aralkyl group, -C(=O)-CR³₃, and a polymerizable functional group. R¹'s in the present constitutional unit may be the same or different from each other.

The various aspects described for the constitutional unit 1 can also be applied to the alkyl group, the alkenyl group, the alkynyl group, the aryl group, the aralkyl group, -C(=O)-CR³₃, and the polymerizable functional group of the present constitutional unit.

The compound represented by Formula 1 includes one kind or two or more kinds of the present constitutional units. In the compound represented by Formula 1, for example, it is preferable that at least a part of the present constitutional units has all of the two R¹'s being alkyl groups, and it is preferable that all of the present constitutional units have all of the two R¹'s being alkyl groups.

b, that is a proportion of the number of moles of the present constitutional unit in the compound represented by Formula 1, is a positive number of 0 or more and 1 or less. The lower limit value of b is not particularly limited, but is, for example, preferably 0.25 or more, more preferably 0.3 or more, and still more preferably 0.35 or more. The lower limit value of b may be 0.4 or more. The upper limit value of b is not particularly limited, but is, for example, preferably 0.5 or less, and more preferably 0.45 or less.

### -Constitutional Unit 3-

R¹ in the constitutional unit 3 (that is, the constitutional unit represented by "R¹SiO_{3/2}") is at least one selected from the group consisting of a hydrogen atom, an alkyl group, an alkenyl group, an alkynyl group, an aralkyl group, an aryl group, -C(=O)-CR³₃, and a monovalent organic group having a reactive group (polymerizable functional group). R¹'s in the present constitutional unit may be the same or different from each other.

The various aspects described for the constitutional unit 1 can also be applied to the alkyl group, the alkenyl group, the alkynyl group, the aralkyl group, the aryl group, -C(=O)-CR³₃, and the polymerizable functional group of the present constitutional unit.

The compound represented by Formula 1 includes one kind or two or more kinds of the present constitutional units. For example, R¹ of one present constitutional unit may be an alkyl group, and R¹ of the other constitutional unit may be a polymerizable functional group. In addition, for example, R¹ of one present constitutional unit may be a hydrogen atom, and R¹ of the other constitutional unit may be an unsaturated organic group as the polymerizable functional group.

c, that is a proportion of the number of moles of the present constitutional unit in the compound represented by Formula 1, is a positive number of 0 or more and 1 or less. c is not particularly limited, but is, for example, preferably 0.25 or more and 1 or less, more preferably 0.3 or more and 1 or less, still more preferably 0.35 or more and 1 or less, and particularly preferably 0.4 or more and 1 or less. c may be 0.5 or more, 0.6 or more, 0.7 or more, 0.8 or more, 0.9 or more, 0.95 or more, 0.99 or more, or 1.

### -Constitutional Unit 4-

The constitutional unit 4 (that is, the constitutional unit represented by "SiO_{4/2}") has a main chain of polysiloxane. A proportion of the present constitutional unit in the compound represented by Formula 1 is not particularly limited.

d, that is a proportion of the number of moles of the present constitutional unit in the compound represented by Formula 1, is a positive number of 0.00 or more and 1.00 or less. The lower limit value of d is not particularly limited, but is, for example, preferably 0.25 or more, more preferably 0.30 or more, and still more preferably 0.35 or more. The lower limit value of d may be 0.40 or more. The upper limit value of d is not particularly limited, but is, for example, preferably 0.90 or less.

### -Constitutional Unit 5-

The constitutional unit 5 (that is, the constitutional unit represented by "R²O_{1/2}") defines a unit including an alkoxy group or a hydroxyl group in the compound represented by Formula 1. That is, R² in the present constitutional unit is a hydrogen atom or an alkyl group. The alkyl group may be an aliphatic group or an alicyclic group, and may be linear or branched. The number of carbon atoms in the alkyl group is, for example, preferably 1 or more and 10 or less. Specific examples of the alkyl group having 1 or more and 10 or less carbon atoms include a methyl group, an ethyl group, a n-propyl group, an isopropyl group, a butyl group, a pentyl group, and a hexyl group.

The alkoxy group in the present constitutional unit may be, for example, one that remains in the molecule in a synthesis process of the compound represented by Formula 1. In addition, the hydroxyl group in the present constitutional unit may be a hydroxyl group or the like, that remains in the molecule without polycondensation after hydrolysis of the "alkoxy group".

e, that is a proportion of the number of moles of the present constitutional unit in the compound represented by Formula 1, is a positive number of 0.00 or more and 1.00 or less. The lower limit value of e is not particularly limited, but is, for example, preferably 0.20 or more, more preferably 0.25 or more, and still more preferably 0.30 or more. The lower limit value of e may be 0.40 or more. The upper limit value of e is not particularly limited, but is, for example, preferably 0.90 or less.

For example, the compound represented by Formula 1 preferably includes one or two or more selected from the group consisting of the constitutional unit 1, the constitutional unit 2, and the constitutional unit 4. That is, in Formula 1, for example, it is preferable that one or two or more of a, b, and d are positive numbers of 0 or more.

The silsesquioxane compound may be in a particle shape or a non-particle shape such as a binding resin. In a case where the silsesquioxane compound is in a particle shape, the particles may be resin particles consisting of only the silsesquioxane compound (hereinafter, also simply referred to as "silsesquioxane resin particles"), or may be resin particles formed by mixing the silsesquioxane compound with other resin components.

A volume average particle diameter of the silsesquioxane resin particles is, for example, preferably 0.01 µm or more and 10.00 µm or less, more preferably 0.10 µm or more and 5.00 µm or less, and still more preferably 0.20 µm or more and 3.00 µm or less.

In a case where the volume average particle diameter of the silsesquioxane resin particles is 0.01 µm or more, the silsesquioxane resin particles are easily uniformly dispersed in the surface layer, the coefficient µl of dynamic friction of the surface layer of the pressurizing belt is easily set within the above-described range, the slipperiness of the surface layer is more excellent, and both the image shift and the paper wrinkles due to the paper slip on the fixing surface are further suppressed.

In a case where the volume average particle diameter of the silsesquioxane resin particles is 10.00 µm or less, a surface roughness of the surface layer is suppressed from increasing, and thus the occurrence of paper wrinkles is further suppressed.

A method of measuring the average particle diameter of the silsesquioxane resin particles is as follows.

A sample is collected from the surface layer of the pressurizing belt to be measured. The sample is a sample in which a cut surface along a thickness direction of the surface layer is used as an observation surface.

The observation surface of the sample is observed with a scanning electron microscope to capture an image. In the image, an area of each primary particle of the silsesquioxane resin particles is measured by image analysis, and an equivalent circle diameter thereof is calculated from this area value. The equivalent circle diameter is calculated for 100 silsesquioxane resin particles. A 50% diameter (D50v) in the volume-based cumulative frequency of the obtained equivalent circle diameter is defined as the volume average particle diameter of the silsesquioxane resin particles.

In a case where the silsesquioxane compound is in a particle shape, a content of the silsesquioxane resin particles with respect to the surface layer is, for example, preferably 1.0% by mass or more and 20.0% by mass or less, more preferably 1.0% by mass or more and 17.5% by mass or less, and still more preferably 1.0% by mass or more and 15.0% by mass or less.

In a case where the content of the silsesquioxane resin particles is 1.0% by mass or more, the surface layer has more excellent slipperiness, and thus both the image shift and the paper wrinkles due to the paper slip on the fixing surface are further suppressed.

In a case where the content of the silsesquioxane resin particles is 20.0% by mass or less, a surface roughness of the surface layer is suppressed from increasing, and thus the occurrence of paper wrinkles is further suppressed.

In a case where the silsesquioxane compound is in a non-particle shape such as a binding resin, a content of the silsesquioxane compound with respect to the surface layer is, for example, preferably 50.0% by mass or more and 100.0% by mass or less, more preferably 75.0% by mass or more and 100.0% by mass or less, and still more preferably 80.0% by mass or more and 100.0% by mass or less.

In a case where the content of the silsesquioxane compound is 50.0% by mass or more, the surface layer has more excellent slipperiness, and thus both the image shift and the paper wrinkles due to the paper slip on the fixing surface are further suppressed.

A content of the compound represented by Formula 1 in the entire silsesquioxane compound is, for example, preferably 80.0% by mass or more and 100.0% by mass or less, more preferably 90.0% by mass or more and 100.0% by mass or less, and still more preferably 95.0% by mass or more and 100.0% by mass or less.

### · Aspect of Surface Layer

The surface layer is a cured product of the composition containing the compound represented by Formula 1. The surface layer may be a cured product of a composition containing only the compound represented by Formula 1 (but, the composition may contain an additive such as a curing agent) without containing other resins, or may be a cured product of a composition in which other resins and the silsesquioxane compound are mixed. In a case where the composition is a mixture of other resins and the silsesquioxane compound, the other resins are, for example, preferably a so-called binding resin.

In a case where the composition is a mixture of other resins and the silsesquioxane compound, the silsesquioxane compound is, for example, preferably a liquid compound or a particle-shaped compound. Examples of the other resins contained in the composition include a polyimide resin (PI resin), a polyamide-imide resin (PAI resin), a polyether ketone resin (for example, an aromatic polyether ether ketone resin or the like), a polyphenylene sulfide resin (PPS resin), a polyetherimide resin (PEI resin), a polyester resin, a polystyrene resin, a polyamide resin, a polycarbonate resin, a silicone resin, and a mixed resin thereof. Among the above, as the other resins, for example, it is preferable to contain a silicone resin. Since the silicone resin has a bonding group similar to a bonding group of the siloxane compound, the silicone resin has excellent affinity with the siloxane compound. Therefore, the siloxane compound is strongly bonded to the silicone resin in the surface layer, and the siloxane compound is less likely to be released from the surface layer. As a result, both the image shift and the paper wrinkles due to the paper slip on the fixing surface are further suppressed.

A content of the fluororesin with respect to the surface layer is, for example, preferably 20% by mass or less, more preferably 10% by mass or less, and still more preferably 5% by mass or less. The above-described content of the fluororesin may be 0% by mass.

In a case where the above-described content of the fluororesin is 20% by mass or less, the coefficient µ2 of dynamic friction with the outer peripheral surface of the pressurizing belt and the value of Δ(µ1 - µ2) are easily adjusted within the above-described ranges. In addition, for example, it is preferable from the viewpoint of manufacturing with low environmental load.

In the surface layer of the pressurizing belt, a tensile elastic modulus at 150°C is, for example, preferably 100 Mpa or more, more preferably 1,000 Mpa or more and 3,500 Mpa or less, and still more preferably 1,500 Mpa or more and 3,000 Mpa or less.

In a case where the tensile elastic modulus of the surface layer of the pressurizing belt at 150°C is 100 Mpa or more, the slipperiness of the surface layer is more excellent, and both the image shift and the paper wrinkles due to the paper slip on the fixing surface are further suppressed.

In a case where the tensile elastic modulus of the surface layer of the pressurizing belt at 150°C is 3,500 Mpa or less, rebound of the surface layer of the pressurizing belt with respect to the paper is suppressed to be small, and the occurrence of the paper wrinkles is further suppressed.

A method of setting the tensile elastic modulus at 150°C to be within the above-described range is not particularly limited, and examples thereof include a method of forming the surface layer of the pressurizing belt from a cured film of a composition containing the compound represented by Formula 1 and/or the silsesquioxane compound.

The value of the tensile elastic modulus at 150°C is a value measured by a tensile characteristic test method defined in JIS K7127 (1999).

In the surface layer of the pressurizing belt, a surface roughness Ra is, for example, preferably 0.90 µm or less, more preferably 0.05 µm or more and 0.80 µm or less, and still more preferably 0.05 µm or more and 0.70 µm or less.

In a case where the surface roughness Ra of the surface layer of the pressurizing belt is less than 1.0 µm, the slipperiness of the surface layer is more excellent, and both the image shift and the paper wrinkles due to the paper slip on the fixing surface are further suppressed.

A method of setting the surface roughness Ra of the surface layer of the pressurizing belt to be within the above-described range is not particularly limited, and examples thereof include a method of forming the surface layer of the pressurizing belt from a cured film of a composition containing the compound represented by Formula 1 and/or the silsesquioxane compound.

A method of measuring the surface roughness Ra of the surface layer of the pressurizing belt is as follows.

A part of the surface layer of the pressurizing belt is cut out with a cutter or the like to obtain a measurement sample. The measurement is performed on the measurement sample using a stylus type surface roughness measuring machine (SURFCOM 1400A; manufactured by Tokyo Seimitsu Co., Ltd.). The measurement conditions are in accordance with JIS B 0601-1994, and the evaluation length Ln is set to 2.5 mm, the reference length L is set to 0.8 mm, and the cut-off value is set to 0.008 mm.

A thickness of the surface layer is, for example, preferably 5 µm or more and 100 µm or less, and more preferably 10 µm or more and 30 µm or less.

### · Method of Forming Surface Layer

A method of forming the surface layer is not particularly limited, and a conventional method can be applied.

In a case where the surface layer is the cured product of the composition containing only the silsesquioxane compound without containing other resins, for example, a cylindrical mold in which the base material of the fixing belt member is installed may be dipped and coated with a solution of the composition containing the silsesquioxane compound, and the coating film may be cured (for example, irradiated with ultraviolet rays) to form the surface layer on the base material.

In a case where the surface layer is a cured product of a composition containing liquid other resins and a particle-shaped silsesquioxane compound, for example, the particle-shaped silsesquioxane compound is added to the liquid other resins such as a silicone resin solution, and is stirred to obtain a mixed solution. The cylindrical mold in which the base material of the fixing belt member is installed may be dipped and coated with the mixed solution and cured to form the surface layer on the base material.

### (Resin Base Material Layer)

Examples of a resin contained in the resin base material layer include a polyimide resin, a polyamide-imide resin, a polyether ether ketone resin, a polyphenylene sulfide resin, a polyether sulfone resin, a polysulfone resin, and a polyphenylsulfone resin. The resin may be used alone or in combination of two or more kinds thereof. Among these, as the resin, for example, it is preferable to contain a polyimide resin.

Examples of the polyimide resin include an imidized polyamic acid (precursor of a polyimide resin) that is a polymer of a tetracarboxylic dianhydride and a diamine compound.

Examples of the polyimide resin include a resin having a constitutional unit represented by General Formula (I).

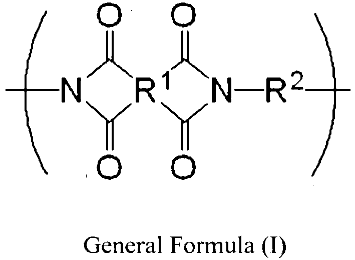

In General Formula (I), R¹ represents a tetravalent organic group, and R² represents a divalent organic group.

Examples of the tetravalent organic group represented by R¹ include an aromatic group, an aliphatic group, a cyclic aliphatic group, a group obtained by combining an aromatic group and an aliphatic group, and a group obtained by the substitution of these groups. Specific examples of the tetravalent organic group include a residue of a tetracarboxylic dianhydride described later.

Examples of the divalent organic group represented by R² include an aromatic group, an aliphatic group, a cyclic aliphatic group, a group obtained by combining an aromatic group and an aliphatic group, and a group obtained by the substitution of these groups. Specific examples of the divalent organic group include a residue of a diamine compound described later.

Specific examples of the tetracarboxylic dianhydride used as a raw material for the polyimide resin include pyromellitic dianhydride, 3,3',4,4'-benzophenone tetracarboxylic dianhydride, 3,3',4,4'-biphenyltetracarboxylic dianhydride, 2,3,3',4-biphenyltetracarboxylic dianhydride, 2,3,6,7-naphthalene tetracarboxylic dianhydride, 1,2,5,6-naphthalene tetracarboxylic dianhydride, 1,4,5,8-naphthalene tetracarboxylic dianhydride, 2,2'-bis(3,4-dicarboxyphenyl)sulfonic dianhydride, perylene-3,4,9,10-tetracarboxylic dianhydride, bis(3,4-dicarboxyphenyl)ether dianhydride, and thylenetetracarboxylic dianhydride.

Specific examples of the diamine compound used as a raw material for the polyimide resin include 4,4'-diaminodiphenyl ether, 4,4'-diaminodiphenylmethane, 3,3'-diaminodiphenylmethane, 3,3'-dichlorobenzidine, 4,4'-diaminodiphenylsulfide, 3,3'-diaminodiphenylsulfone, 1,5-diaminonaphthalene, m-phenylenediamine, p-phenylenediamine, 3,3'-dimethyl-4,4'-biphenyldiamine, benzidine, 3,3'-dimethylbenzidine, 3,3'-dimethoxybenzidine, 4,4'-diaminodiphenylsulfone, 4,4'-diaminodiphenylpropane, 2,4-bis(β-amino tert-butyl)toluene, bis(p-β-amino-tert-butylphenyl)ether, bis(p-β-methyl-δ-aminophenyl)benzene, bis-p-(1,1-dimethyl-5-aminopentyl)benzene, 1-isopropyl-2,4-m-phenylenediamine, m-xylylenediamine, p-xylylenediamine, di(p-aminocyclohexyl)methane, hexamethylenediamine, heptamethylenediamine, octamethylenediamine, nonamethylenediamine, decamethylenediamine, diaminopropyltetradiamine, 3-methylheptamethylenediamine, 4,4-dimethylheptamethylenediamine, 2,11-diaminododecane, 1,2-bis-3-aminopropoxyethane, 2,2-dimethylpropylenediamine, 3-methoxyhexamethylenediamine, 2,5-dimethylheptamethylenediamine, 3-methylheptamethylenediamine, 5-methylnonamethylenediamine, 2,17-diaminoeicosadecane, 1,4-diaminocyclohexane, 1,10-diamino-1,10-dimethyldecane, 12-diaminooctadecane, 2,2-bis[4-(4-aminophenoxy)phenyl]propane, piperazine, H₂N(CH₂)₃O(CH₂)₂O(CH₂)NH₂, H₂N(CH₂)₃S(CH₂)₃NH₂, and H₂N(CH₂)₃N(CH₃)₂(CH₂)₃NH₂.

Examples of the polyamide-imide resin include a resin having an imide bond and an amide bond in a repeating unit. More specific examples of the polyamide-imide resin include a polymer of a trivalent carboxylic acid compound (also called a tricarboxylic acid) having an acid anhydride group and a diisocyanate compound or a diamine compound.

As the tricarboxylic acid, for example, trimellitic acid anhydride or a derivative thereof is preferable. In addition to the tricarboxylic acid, a tetracarboxylic dianhydride, an aliphatic dicarboxylic acid, an aromatic dicarboxylic acid, or the like may also be used in combination.

Examples of the diisocyanate compound include 3,3'-dimethylbiphenyl-4,4'-diisocyanate, 2,2'-dimethylbiphenyl-4,4'-diisocyanate, biphenyl-4,4'-diisocyanate, biphenyl-3,3'-diisocyanate, biphenyl-3,4'-diisocyanate, 3,3'-diethylbiphenyl-4,4'-diisocyanate, 2,2'-diethylbiphenyl-4,4'-diisocyanate, 3,3'-dimethoxybiphenyl-4,4'-diisocyanate, 2,2'-dimethoxybiphenyl-4,4'-diisocyanate, naphthalene-1,5-diisocyanate, and naphthalene-2,6-diisocyanate.

Examples of the diamine compound include a compound that has the same structure as the above-described isocyanate and has an amino group instead of an isocyanato group.

The resin base material layer may contain other components in addition to the resin. Examples of the other components include a conductive material, a filler for improving mechanical strength, an antioxidant for preventing thermal deterioration, a surfactant, and a heat-resistant antioxidant.

### (Elastic Layer)

The elastic layer contains, for example, a heat-resistant elastic material.

Examples of the heat-resistant elastic material include silicone rubber and fluororubber.

Examples of the silicone rubber include room temperature vulcanizing (RTV) silicone rubber, high temperature vulcanizing (HTV) silicone rubber, and liquid silicone rubber; and specific examples thereof include polydimethylsilicone rubber, methylvinyl silicone rubber, methylphenyl silicone rubber, and fluoro silicone rubber.

Examples of the fluororubber include vinylidene fluoride-based rubber, tetrafluoroethylene/propylene-based rubber, tetrafluoroethylene/perfluoromethyl vinyl ether rubber, phosphazene-based rubber, and fluoropolyether rubber.

The elastic layer may contain other components. Examples of the other components include a filler, a conductive material, a softener (such as a paraffin-based softener), a processing aid (such as stearic acid), an antioxidant (such as an amine-based antioxidant), a vulcanizing agent (such as sulfur, a metal oxide, and a peroxide), and a functional filler (such as alumina).

### [Heating Roll 30]

The heating roll 30 is configured, for example, by sequentially forming an elastic body layer 30b and a release layer 30c on a metal hollow metal core 30a having a heating source 31 such as a halogen lamp inside.

The metal core 30a is composed of, for example, a cylindrical metal body made of aluminum, stainless steel, or the like. The elastic body layer 30b is configured with, for example, HTV silicone rubber or fluororubber (JIS-A rubber hardness: approximately 45 degrees; a rubber hardness based on JIS K6301, as measured by a spring type of Durometer Type A manufactured by Teclock Co., Ltd. under a load of 1,000 gf added) with a thickness of approximately 2 mm or more and 5 mm or less. The release layer 30c is configured with, for example, fluororubber, silicone rubber, or a fluororesin with a thickness of 20 µm or more and 50 µm or less. Obviously, the release layer is not limited to the materials, and materials that are known in the related art may be used.

The heating roll 30 is rotationally driven at a peripheral speed of, for example, 260 mm/sec by adjusting a speed of a drive source. An outer diameter of the heating roll 30 is generally, for example, approximately 25 mm or more and 80 mm or less.

A surface temperature of the heating roll 30 is detected by a temperature sensor (not shown) coming into contact with the surface, and is controlled by a control circuit (not shown) such that the surface temperature is, for example, 175°C.

### [Pressing Pad 50 (Example of Pressing Member)]

The pressing pad 50 has two pressing portions 51a and 51b having different hardnesses along a traveling direction of a recording medium P. The pressing portion 51a on the recording medium P entry side in the pressing pad 50 is configured with a rubber-like elastic member, the pressing portion 51b on the recording medium P discharge side is configured with a hard pressure applying member such as a metal, and a pressure in a contact region on the recording medium P discharge side is set to be higher than that on the recording medium P entry side. The pressing portions 51a and 51b are supported by a holder 51c and press the heating roll 30 from the inner peripheral surface of the pressurizing belt 40 through the sliding sheet 60 (an example of the sliding member).

### [Sliding Sheet 60 (Example of Sliding Member)]

The sliding sheet 60 may be a monolayer of a resin base material layer, or may be a laminate of a resin base material layer constituting a sliding surface and another layer provided on a side of the resin base material layer opposite to the sliding surface.

The sliding sheet 60 is made of, for example, a sliding surface containing a heat-resistant thermoplastic resin.

Examples of the heat-resistant thermoplastic resin include a polyether ether ketone resin, a polyphenylene sulfide resin, a polyetherimide resin, a polyphenylsulfone resin, a polyether sulfone resin, and a polysulfone resin.

Among the above, as the heat-resistant thermoplastic resin, for example, at least one resin selected from the group consisting of a polyether ether ketone resin, a polyphenylene sulfide resin, a polyetherimide resin, and a polyphenylsulfone resin is preferable; and at least one resin selected from the group consisting of a polyether ether ketone resin and a polyphenylene sulfide resin is more preferable.

For example, these resins (in particular, a polyether ether ketone resin and a polyphenylene sulfide resin) are preferable from the viewpoint of high abrasion resistance, high toughness, and high elastic modulus.

The resin base material layer constituting the sliding surface may contain other components, in addition to the resin. Examples of the other components include a conductive material, a filler for improving mechanical strength, an antioxidant for preventing thermal deterioration, a surfactant, and a heat-resistant antioxidant.

### [Lubricant 62 (Example of Lubricant)]

The lubricant 62 is interposed between the inner peripheral surface of the pressurizing belt and the sliding member.

Examples of the lubricant 62 include grease, silicone oil (for example, dimethyl silicone oil, methylphenyl silicone oil, amino-modified silicone oil, carboxy-modified silicone oil, silanol-modified silicone oil, sulfonic acid-modified silicone oil, and the like), and fluorinated oil (for example, fluorosilicone oil, perfluoropolyether oil, and the like). Among these, from the viewpoint of setting a viscosity of the lubricant within a range described below, for example, the lubricant preferably contains silicone oil, and more preferably includes long-chain alkyl-modified silicone oil (for example, having 3 or more carbon atoms).

The lubricant 62 may contain other components in addition to the oil. Examples of the other components include a grease (such as a silicon grease), a thermally conductive agent, an antioxidant, a surfactant, silicone particles, an organic metal salt, and a hindered amine.

### [Image Forming Operation of Image Forming Apparatus]

Hereinafter, an image forming operation of the image forming apparatus according to the present exemplary embodiment will be described. An operation of forming a yellow image in the first process cartridge 10Y will be described as a representative of the image forming operation.

First, before the image forming operation, a surface of the photoreceptor 1Y is charged to, for example, a potential of approximately -600 V or more and -800 V or less by the charging roller 2Y.

The photoreceptor 1Y is formed by, for example, laminating a photosensitive layer on a conductive substrate. The photosensitive layer has properties in that the layer usually has a high resistance, but for example, in a case of being irradiated with the laser beam 3Y, a specific resistance of a portion irradiated with the laser beam changes. Therefore, through an exposure device 3, the laser beam 3Y is output to the surface of the charged photoreceptor 1Y according to the image data for yellow transmitted from the control unit (not shown). The photosensitive layer on the surface of the photoreceptor 1Y is irradiated with the laser beam 3Y such that an electrostatic latent image of a yellow printing pattern is formed on the surface of the photoreceptor 1Y.

In this manner, the electrostatic latent image formed on the photoreceptor 1Y is rotated to a development position as the photoreceptor 1Y travels. At the development position, the electrostatic latent image on the photoreceptor 1Y is developed to form a visible image (toner image) by the developing device 4Y.

For example, a developer containing a yellow toner and a carrier is accommodated in the developing device 4Y. The yellow toner is frictionally charged by being agitated inside in the developing device 4Y, and has the same polarity (negative polarity) as the charged electric charge on the photoreceptor 1Y. As the surface of the photoreceptor 1Y passes through the developing device 4Y, the yellow toner electrostatically adheres to only the neutralized latent image portion on the surface of the photoreceptor 1Y, and the latent image is developed by the yellow toner. The photoreceptor 1Y on which the yellow toner image is formed continues to travel, and the developed toner image on the photoreceptor 1Y is transported to a primary transfer position.

In a case where the yellow toner image on the photoreceptor 1Y is transported to the primary transfer position, a primary transfer bias is applied to the primary transfer roller 5Y, an electrostatic force from the photoreceptor 1Y toward the primary transfer roller 5Y acts on the toner image, and the toner image on the photoreceptor 1Y is transferred to the intermediate transfer belt 20. The transfer bias applied at this time has a polarity (+) opposite to the polarity (-) of the toner, and for example, in the first process cartridge 10Y, the transfer bias is subjected to a constant current control to approximately +10 µA by the control unit (not shown).

In addition, the primary transfer biases applied to the primary transfer rollers 5M, 5C, and 5K after the second process cartridge 10M are also controlled in the same manner.

In this way, the intermediate transfer belt 20 to which the yellow toner image is transferred by the first process cartridge 10Y is sequentially transported through the second to fourth process cartridges 10M, 10C, and 10K, and the toner images of the respective colors are superimposed and transferred in layers in the same manner.

The intermediate transfer belt 20 to which toner images of all colors are transferred in layers through the first to fourth process cartridges reaches a secondary transfer section configured with the intermediate transfer belt 20, the support roller 24 in contact with the inner peripheral surface of the intermediate transfer belt 20, and a secondary transfer roller (an example of a secondary transfer device) 26 disposed on the image holding surface side of the intermediate transfer belt 20. On the other hand, the recording medium P is fed to the gap between the secondary transfer roller 26 and the intermediate transfer belt 20 by a feeding mechanism, and secondary transfer bias is applied to the support roller 24. The transfer bias applied at this time has the same polarity (-) as the polarity (-) of the toner, and the electrostatic force heading for the recording medium P from the intermediate transfer belt 20 acts on the toner image, that makes the toner image on the intermediate transfer belt 20 transferred onto the recording medium P. The secondary transfer bias at this time is determined according to the resistance detected by a resistance detection section (not shown) that detects the resistance of the secondary transfer section, and is controlled at a constant voltage thereof.

The intermediate transfer belt 20, the primary transfer roller 5Y, and the secondary transfer roller 26 correspond to an example of the transfer device.

Thereafter, the recording medium P is sent to the fixing device 28, and inserted into a contact region formed by a pressure contact between the heating roll 30 rotationally driven in a direction of the arrow and the pressurizing belt 40. At this time, the recording medium P is inserted such that a surface of the recording medium P, on which an unfixed toner image has been formed, faces a surface of the heating roll 30. In a case where the recording medium P passes through the contact region, heat and pressure are applied to the recording medium P so that the unfixed toner image is fixed onto the recording medium P. The recording medium P after fixing passes through the contact region, is peeled off from the heating roll 30, and discharged from the fixing device 28.

In this manner, a fixing treatment is performed and the image is permanently fixed onto the recording medium P. The recording medium P on which the colored image has been fixed is transported to an output portion, and a series of colored image forming operations is finished.

### [Examples]

Examples will be described below, but the present invention is not limited to these examples. In the following description, unless otherwise specified, "part" and "%" are based on mass.

### <Production of Pressurizing Belt>

### · Production of Pressurizing Belts 1 and 6 to 8

A surface of a resin tubular body in a state of being inserted and fixed in a metal cylindrical mold is dipped in a solution of the silsesquioxane compound of the type shown in Table 1 to obtain a resin tubular body on which a coating film of a surface layer is formed. Next, the resin tubular body in a state of being inserted into the mold is irradiated with ultraviolet rays while rotating the resin tubular body to cure the coating film of the composition formed on the surface of the resin tubular body, thereby obtaining a pressurizing belt of each example. The resin tubular body is irradiated with ultraviolet rays for 10 minutes from a position 300 mm away from the resin tubular body using a high-pressure mercury lamp (60 W/cm) in an air atmosphere.

### · Production of Pressurizing Belts 5 and 10

A surface of a resin tubular body in a state of being inserted and fixed in a metal cylindrical mold is dipped in a solution containing the silsesquioxane compound of the type shown in Table 1 and a silicone resin solution (KS700 manufactured by Shin-Etsu Chemical Co., Ltd.) to obtain a resin tubular body on which a coating film of a surface layer is formed. Next, the resin tubular body in a state of being inserted into the mold is heated and cured in a heating oven set to 280°C for 30 minutes.

### · Production of Pressurizing Belts 2 to 4, 9, and 11 to 12

A surface of a resin tubular body in a state of being inserted and fixed in a metal cylindrical mold is dipped in a solution containing the silsesquioxane compound of the type shown in Table 1 and the resin of the type shown in Table 1 to obtain a resin tubular body on which a coating film of a surface layer is formed. Next, the resin tubular body in a state of being inserted into the mold is heated and cured in a heating oven set to 280°C for 30 minutes.

The amount of the silsesquioxane compound in each pressurizing belt of Examples is shown in Table 1.

The abbreviations shown in Table 1 are as follows.

### -Silsesquioxane Compound-

· SQ1: silsesquioxane compound in which R in a constitutional unit 3 of [RSiO_{1.5}]ₙ is a dimethylsilyloxy group (PSS-octakis(dimethylsilyloxy) substituted)
· SQ2: cage-type silsesquioxane compound having an oxetanyl group (manufactured by TOAGOSEI CO., LTD., OX-SQ SI-20)
· SQ3: cage-type silsesquioxane compound having a methacryloyl group (manufactured by TOAGOSEI CO., LTD., MAC-SQ TM-100)
· SQ4: cage-type silsesquioxane compound having an oxetanyl group (manufactured by TOAGOSEI CO., LTD., OX-SQ TX-100)
· SQ5: silsesquioxane compound having an acryloyl group (manufactured by TOAGOSEI CO., LTD., AC-SQ TA-100)

### · Production of Pressurizing Belt C1 of Comparative Example 1

A silicone-based release agent is applied onto a surface of an aluminum-made cylindrical core body having a roughness shape formed on the surface by a shot blasting processing, a baking treatment was performed at 300°C for 1 hour, and the surface is dip-coated with a varnish having a polyimide resin dissolved in N-methylpyrrolidone, and dried at 120°C for 1 hour. As a result, a resin base material layer constituting an inner peripheral surface of a pressurizing belt is formed.

Next, an outer peripheral surface of a resin base material layer is coated with a fluororesin dispersion (specifically a PTFE dispersion), dried in a baking furnace at 60°C for 10 minutes, and then gradually dried to 320°C, and after baking for 20 minutes, the resin base material layer is cooled to room temperature to form a surface layer.

Thereafter, the resin base material layer on which the surface layer is formed is removed from the core body, and cut to a desired size by a cutting machine to obtain a pressurizing belt.

### · Production of Pressurizing Belt C2 of Comparative Example 2

A pressurizing belt is obtained with the same specifications as the pressurizing belt C1 for Comparative Example 1, except that, in the production of the pressurizing belt of Comparative Example 1, a polycarbonate resin is applied onto the outer peripheral surface of the resin base material layer, instead of the fluororesin dispersion liquid (specifically, the PTFE dispersion liquid).

The silsesquioxane compounds of SQ1 to SQ7 correspond to the compound represented by Formula 1.

The abbreviations in Table 1 are described below.
· PC resin: polycarbonate resin
· PI resin: polyimide resin
· Ur resin: urethane resin, SUPERFLEX 420, manufactured by DKS Co. Ltd.; urethane resin-dispersed aqueous solution; a predetermined amount of silsesquioxane is blended in the urethane resin-dispersed aqueous solution, and the mixture is stirred and mixed; the coating method is the same as the method described above, and the surface layer is coated to form a tubular body.

In Table 1, "Relation" indicates which of µ1 and µ2 is a larger numerical value.

In Table 1, "µ1'' refers to a coefficient of dynamic friction between a surface of the heating roll and a surface of paper on a side on which a toner image is fixed.

In Table 1, "µ2" refers to a coefficient of dynamic friction between a back surface of the paper and an outer peripheral surface of the pressurizing belt.

In Table 1, "Δ(µ1 - µ2)" refers to a difference between the coefficients µ1 and µ2 of dynamic friction described above.

In Table 1, "Elastic modulus at 150°C" in the item of "surface layer of pressurizing belt" refers to a tensile elastic modulus at 150°C.

In Table 1, "Elastic modulus at 150°C" in the item of "surface layer of heating roll" refers to a tensile elastic modulus at 150°C.

### <Production of Heating Rolls 1 to 5>

An elastic layer consisting of silicone rubber is formed on a roll surface consisting of an aluminum metal substrate by a mold injection molding method, and a metal roll including the elastic layer is obtained by heating and vulcanizing the elastic layer at 180°C. A silane coupling agent adhesive is spray-coated on the roll surface, and then dried, and a tube consisting of a tetrafluoroethylene perfluoroalkyl vinyl ether copolymer (PFA resin) (hereinafter, also referred to as a PFA tube) is coated to obtain a PFA-coated heating roll.

Heating rolls 1 to 5 use the same PFA tube as described above, but a tensile elastic modulus of the surface layer of the heating roll at 150°C is adjusted to the values in Table 1 by adjusting the production factor.

### <Production of Fixing Device and Image Forming Apparatus: Examples 1 to 12 and Comparative Examples 1 and 2>

The pressurizing belt of the type shown in Table 1 and the heating roll of the type shown in Table 1 are mounted on a fixing device in an image forming apparatus "modified machine of APEOS PORT PrintC5570" manufactured by FUJIFILM Business Innovation Corp. The fixing device has the configuration shown in FIG. 1. In addition, the image forming apparatus has the configuration shown in FIG. 2.

### <Evaluation>

Paper wrinkles and image shift are evaluated as follows.

A4 paper is printed out in a direction in which a short side direction of the recording medium and an extension direction of a rotation axis of the heating roll matches, and a solid image (black solid image with 100% density) is output on A3 paper every 100,000 sheets (100 kPV), and the evaluation of the paper wrinkles and the image shift in the paper running is performed up to 1,500,000 sheets (1,500 kPV) according to the following standards.

### -Evaluation Standard: Paper Wrinkles-

A: no deformation and wrinkles of the paper occur even in a case of outputting up to 1,500 kPV.
B: deformation and wrinkles of the paper occur in a case of being more than 1,000 kPV and 1,500 kPV or less.
C: deformation and wrinkles of the paper occur in a case of being more than 500 kPV and 1,000 kPV or less.
D: deformation and wrinkles of the paper occur in a case of being more than 200 kPV and 500 kPV or less.
E: deformation and wrinkles of the paper occur in a case of being 200 kPV or less.

### -Evaluation Standard: Image Shift-

A: no image shift occurs even in a case of outputting up to 1,500 kPV.
B: image shift occurs in a case of being more than 1,000 kPV and 1,500 kPV or less.
C: image shift occurs in a case of being more than 500 kPV and 1,000 kPV or less.
D: image shift occurs in a case of being more than 200 kPV and 500 kPV or less.
E: image shift occurs in a case of being 200 kPV or less.

**[Table 1]**

| | | Coefficient of dynamic friction | | | | Pressurizing belt | | | | | | | | Heating roll | | | Evaluation | |
|---|---|---|---|---|---|---|---|---|---|---|---|---|---|---|---|---|---|---|
| | | | | | | Type | Surface layer | | | | | | Base material layer | Type | Surface layer | | Paper | Image |
| | | | | | | | Silsesquioxane compound | | | Other resins | Surface roughness Ra (µm) | Elastic modulus at 150°C (MPa) | | | | | | Image shift |
| | | µ1 | Relation | µ2 | Δ(µ1 - µ2) | | Type | Form | Amount (% by mass) | Type | | | Type | | Type of resin | Elastic modulus at 150°C (MPa) | | |
| Example | 1 | 0.62 | > | 0.25 | 0.37 | 1 | SQ2 | Single layer | 100 | - | 0.10 | 2330 | PI resin | 1 | PFA resin | 43 | A | A |
| Example | 2 | 0.60 | > | 0.42 | 0.18 | 2 | SQ1 | Resin particles | 3 | PC resin | 0.30 | 2150 | PI resin | 2 | PFA resin | 44 | B | B |
| Example | 3 | 0.62 | > | 0.35 | 0.27 | 3 | SQ1 | Resin particles | 7 | PC resin | 0.52 | 2230 | PI resin | 3 | PFA resin | 42 | B | B |
| Example | 4 | 0.63 | > | 0.30 | 0.33 | 4 | SQ1 | Resin particles | 11 | PC resin | 0.68 | 2310 | PI resin | 4 | PFA resin | 41 | B | B |
| Example | 5 | 0.63 | > | 0.20 | 0.43 | 5 | SQ1 | Resin particles | 11 | Silicone resin | 0.68 | 2300 | PI resin | 1 | PFA resin | 41 | A | A |
| Example | 6 | 0.63 | > | 0.21 | 0.42 | 6 | SQ3 | Single layer | 100 | - | 0.10 | 2250 | PI resin | 2 | PFA resin | 44 | A | A |
| Example | 7 | 0.63 | > | 0.23 | 0.40 | 7 | SQ4 | Single layer | 100 | - | 0.10 | 2100 | PI resin | 3 | PFA resin | 42 | A | A |
| Example | 8 | 0.63 | > | 0.18 | 0.45 | 8 | SQ5 | Single layer | 100 | - | 0.10 | 2301 | PI resin | 3 | PFA resin | 42 | A | A |
| Example | 9 | 0.83 | > | 0.75 | 0.08 | 9 | SQ1 | Resin particles | 1 | PC resin | 0.21 | 2001 | PI resin | 1 | PFA resin | 41 | B | C |
| Example | 10 | 0.63 | > | 0.08 | 0.55 | 10 | SQ1 | Resin particles | 17 | Silicone resin | 0.78 | 2550 | PI resin | 1 | PFA resin | 41 | C | C |
| Example | 11 | 0.63 | > | 0.46 | 0.17 | 11 | SQ1 | Resin particles | 20 | PC resin | 0.90 | 900 | PI resin | 1 | PFA resin | 41 | C | C |
| Example | 12 | 0.63 | > | 0.41 | 0.22 | 12 | SQ1 | Resin particles | 1 | Ur resin | 0.08 | 3600 | PI resin | 1 | PFA resin | 41 | C | C |
| Comparative Example | 1 | 0.62 | = | 0.62 | 0.00 | C1 | - | - | - | PFA resin | 0.02 | 44 | PI resin | 5 | PFA resin | 40 | D | D |
| Comparative Example | 2 | 0.62 | < | 0.99 | -0.37 | C2 | - | - | - | PC resin | 0.22 | 1500 | PI resin | 2 | PFA resin | 42 | D | D |

From the above results, it is found that the fixing device of the present example suppresses both the image shift and the paper wrinkles due to the paper slip on the fixing surface, as compared with the fixing device of the comparative example.

The present exemplary embodiments include the following aspects.
(((1))) A fixing device comprising:
   a heating roll;
   a pressurizing belt that is disposed in contact with the heating roll and has a surface layer that is a cured product of a composition containing a compound represented by Formula 1;
   a pressing member that is disposed on an inner peripheral surface of the pressurizing belt and presses the pressurizing belt against the heating roll from the inner peripheral surface of the pressurizing belt;
   a sliding member that is interposed between the inner peripheral surface of the pressurizing belt and the pressing member; and
   a lubricant that is interposed between the inner peripheral surface of the pressurizing belt and the sliding member,

      (R¹₃SiO_{1/2})ₐ(R¹₂SiO_{2/2})_{b}(R¹SiO_{3/2})_{c}(SiO_{4/2})_{d}(R²O_{1/2})ₑ Formula 1,

      (in Formula 1,
   R¹ represents a hydrogen atom, an alkyl group, an alkenyl group, an alkynyl group, an aralkyl group, an aryl group, a group represented by -C(=O)-CR³₃, or a monovalent organic group having a reactive group, provided that a plurality of R¹'s may be the same or different from each other,
   R² represents a hydrogen atom or an alkyl group, provided that a plurality of R²'s may be the same or different from each other,
   R³ represents a hydrogen atom, a methyl group, or an ethyl group, provided that a plurality of R³'s may be the same or different from each other,
   the monovalent organic group may be substituted with a halogen atom, a hydroxy group, an alkoxy group, an aryloxy group, an aralkyloxy group, or an oxy group,
   the alkyl group, the alkenyl group, the alkynyl group, the aralkyl group, and the aryl group may have a substituent, and
   a, b, d, and e each independently represent 0 or more and 1 or less, c represents more than 0 and 1 or less, and a + b + c + d + e = 1).
(((2))) The fixing device according to (((1))),
   wherein a coefficient µ1 of dynamic friction between a surface of the heating roll and a surface of paper on a side on which a toner image is fixed and a coefficient µ2 of dynamic friction between a back surface of the paper and an outer peripheral surface of the pressurizing belt satisfy a relationship of µ1 > µ2.
(((3))) The fixing device according to (((2))),
   wherein a difference Δµ (µ1 - µ2) between the coefficient µ1 of dynamic friction and the coefficient µ2 of dynamic friction is 0.1 or more and 1.0 or less.
(((4))) A fixing device comprising:
   a heating roll;
   a pressurizing belt that is disposed in contact with the heating roll and has a surface layer that is a cured product of a composition containing a silsesquioxane compound;
   a pressing member that is disposed on an inner peripheral surface of the pressurizing belt and presses the pressurizing belt against the heating roll from the inner peripheral surface of the pressurizing belt;
   a sliding member that is interposed between the inner peripheral surface of the pressurizing belt and the pressing member; and
   a lubricant that is interposed between the inner peripheral surface of the pressurizing belt and the sliding member,
   wherein a coefficient µ1 of dynamic friction between a surface of the heating roll and a surface of paper on a side on which a toner image is fixed and a coefficient µ2 of dynamic friction between a back surface of the paper and an outer peripheral surface of the pressurizing belt satisfy a relationship of µ1 > µ2.
(((5))) The fixing device according to (((3))) or (((4))),
   wherein a difference Δµ (µ1 - µ2) between the coefficient µ1 of dynamic friction and the coefficient µ2 of dynamic friction is 0.20 or more and 0.8 or less.
(((6))) The fixing device according to (((5))),
   wherein the difference Δµ (µ1 - µ2) between the coefficient µ1 of dynamic friction and the coefficient µ2 of dynamic friction is 0.30 or more and 0.60 or less.
(((7))) The fixing device according to any one of (((2))) to (((6))),
   wherein the coefficient µ1 of dynamic friction is 0.4 or more and 0.9 or less.
(((8))) The fixing device according to any one of (((2))) to (((7))),
   wherein the coefficient µ2 of dynamic friction is 0.1 or more and 0.7 or less.
(((9))) The fixing device according to any one of (((4))) to (((8))),
   wherein the silsesquioxane compound includes a compound represented by Formula 1,

      (R¹₃SiO_{1/2})ₐ(R¹₂SiO_{2/2})_{b}(R¹SiO_{3/2})_{c}(SiO_{4/2})_{d}(R²O_{1/2})ₑ Formula 1,

      (in Formula 1,
   R¹ represents a hydrogen atom, an alkyl group, an alkenyl group, an alkynyl group, an aralkyl group, an aryl group, a group represented by -C(=O)-CR³₃, or a monovalent organic group having a reactive group, provided that a plurality of R¹'s may be the same or different from each other,
   R² represents a hydrogen atom or an alkyl group, provided that a plurality of R²'s may be the same or different from each other,
   R³ represents a hydrogen atom, a methyl group, or an ethyl group, provided that a plurality of R³'s may be the same or different from each other,
   the monovalent organic group may be substituted with a halogen atom, a hydroxy group, an alkoxy group, an aryloxy group, an aralkyloxy group, or an oxy group,
   the alkyl group, the alkenyl group, the alkynyl group, the aralkyl group, and the aryl group may have a substituent, and
   a, b, d, and e each independently represent 0 or more and 1 or less, c represents more than 0 and 1 or less, and a + b + c + d + e = 1).
(((10))) The fixing device according to any one of (((1))) to (((9))),
   wherein a tensile elastic modulus of the surface layer of the pressurizing belt at 150°C is 100 Mpa or more.
(((11))) The fixing device according to any one of (((1))) to (((10))),
   wherein a tensile elastic modulus of the surface layer of the pressurizing belt at 150°C is 1,000 Mpa or more and 3,500 Mpa or less.
(((12))) The fixing device according to any one of (((1))) to (((11))),
   wherein a surface roughness Ra of the surface layer of the pressurizing belt is 0.90 µm or less.
(((13))) An image forming apparatus comprising:
   an image holder;
   a charging device that charges a surface of the image holder;
   an electrostatic latent image forming device that forms an electrostatic latent image on the charged surface of the image holder;
   a developing device that accommodates a developer containing a toner and develops the electrostatic latent image formed on the surface of the image holder with the developer to form a toner image;
   a transfer device that transfers the toner image onto a surface of a recording medium; and
   the fixing device according to any one of (((1))) to (((12))), that fixes the toner image on the surface of the recording medium.

According to (((1))) or (((9))), there is provided a fixing device that suppresses both image shift and paper wrinkles due to paper slip on a fixing surface, as compared with a case where the surface layer of the pressurizing belt is a fluororesin layer.

According to (((2))), there is provided a fixing device that suppresses both image shift and paper wrinkles due to paper slip on a fixing surface, as compared with a case where the coefficient µ1 of dynamic friction between the surface of the heating roll and a surface of paper on a side on which a toner image is fixed and the coefficient µ2 of dynamic friction between a back surface of the paper and an outer peripheral surface of the pressurizing belt satisfy a relationship of µ1 = µ2 or µ1 < µ2.

According to (((3))), there is provided a fixing device that suppresses both image shift and paper wrinkles due to paper slip on a fixing surface, as compared with a case where the value of the difference Δµ (µ1 - µ2) between the coefficient µ1 of dynamic friction and the coefficient µ2 of dynamic friction is less than 0.1 or more than 1.0.

According to (((4))), there is provided a fixing device that suppresses both image shift and paper wrinkles due to paper slip on a fixing surface, as compared with a case where the coefficient µ1 of dynamic friction between the surface of the heating roll and a surface of paper on a side on which a toner image is fixed and the coefficient µ2 of dynamic friction between a back surface of the paper and an outer peripheral surface of the pressurizing belt satisfy a relationship of µ1 = µ2 or µ1 < µ2.

According to (((5))), there is provided a fixing device that suppresses both image shift and paper wrinkles due to paper slip on a fixing surface, as compared with a case where the value of the difference Δµ (µ1 - µ2) between the coefficient µ1 of dynamic friction and the coefficient µ2 of dynamic friction is less than 0.20 or more than 0.80.

According to (((6))), there is provided a fixing device that suppresses both image shift and paper wrinkles due to paper slip on a fixing surface, as compared with a case where the value of the difference Δµ (µ1 - µ2) between the coefficient µ1 of dynamic friction and the coefficient µ2 of dynamic friction is less than 0.30 or more than 0.60.

According to (((7))), there is provided a fixing device that suppresses both image shift and paper wrinkles due to paper slip on a fixing surface, as compared with a case where the coefficient µ1 of dynamic friction is less than 0.4 or more than 0.9.

According to (((8))), there is provided a fixing device that suppresses both image shift and paper wrinkles due to paper slip on a fixing surface, as compared with a case where the coefficient µ2 of dynamic friction is less than 0.1 or more than 0.7.

According to (((10))), there is provided a fixing device that suppresses both image shift and paper wrinkles due to paper slip on a fixing surface, as compared with a case where the tensile elastic modulus of the surface layer of the pressurizing belt at 150°C is less than 100 Mpa.

According to (((11))), there is provided a fixing device that suppresses both image shift and paper wrinkles due to paper slip on a fixing surface, as compared with a case where the tensile elastic modulus of the surface layer of the pressurizing belt at 150°C is less than 1,000 Mpa or more than 3,500 Mpa.

According to (((12))), there is provided a fixing device that suppresses both image shift and paper wrinkles due to paper slip on a fixing surface, as compared with a case where the surface roughness Ra of the surface layer of the pressurizing belt is more than 0.90 µm.

According to (((13))), there is provided a fixing device that suppresses both image shift and paper wrinkles due to paper slip on a fixing surface, as compared with a case where "the surface layer of the pressurizing belt is a fluororesin layer" or a case where "the coefficient µ1 of dynamic friction between the surface of the heating roll and a surface of paper on a side on which a toner image is fixed and the coefficient µ2 of dynamic friction between a back surface of the paper and an outer peripheral surface of the pressurizing belt satisfy a relationship of µ1 = µ2 or µ1 < µ2".

The foregoing description of the exemplary embodiments of the present invention has been provided for the purposes of illustration and description. It is not intended to be exhaustive or to limit the invention to the precise forms disclosed. Obviously, many modifications and variations will be apparent to practitioners skilled in the art. The embodiments were chosen and described in order to best explain the principles of the invention and its practical applications, thereby enabling others skilled in the art to understand the invention for various embodiments and with the various modifications as are suited to the particular use contemplated. It is intended that the scope of the invention be defined by the following claims and their equivalents.

### Brief Description of the Reference Symbols

1Y, 1M, 1C, 1K: photoreceptor
2Y, 2M, 2C, 2K: charging roller
3Y, 3M, 3C, 3K: laser beam
3: exposure device
4Y, 4M, 4C, 4K: developing device
5Y, 5M, 5C, 5K: primary transfer roller
6Y, 6M, 6C, 6K: photoreceptor cleaning device
10Y, 10M, 10C, 10K: process cartridge
20: intermediate transfer belt
20a: intermediate transfer body cleaning device
22: drive roller
24: support roller
26: secondary transfer roller
28: fixing device
30: heating roll
30a: hollow metal core
30a: metal core
30b: elastic body layer
30c: release layer
31: heating source
40: pressurizing belt
50: pressing pad
51a: pressing portion
51b: pressing portion
51c: holder
52: belt traveling guide
60: sliding sheet
62: lubricant
64: lubricant supply member
100: image forming apparatus
P: recording medium

## Claims

1. A fixing device comprising:
a heating roll;
a pressurizing belt that is disposed in contact with the heating roll and has a surface layer that is a cured product of a composition containing a compound represented by Formula 1;
a pressing member that is disposed on an inner peripheral surface of the pressurizing belt and presses the pressurizing belt against the heating roll from the inner peripheral surface of the pressurizing belt;
a sliding member that is interposed between the inner peripheral surface of the pressurizing belt and the pressing member; and
a lubricant that is interposed between the inner peripheral surface of the pressurizing belt and the sliding member,
(R¹₃SiO_{1/2})ₐ(R¹₂SiO_{2/2})_{b}(R¹SiO_{3/2})_{c}(SiO_{4/2})_{d}(R²O_{1/2})ₑ Formula 1,
(in Formula 1,
R¹ represents a hydrogen atom, an alkyl group, an alkenyl group, an alkynyl group, an aralkyl group, an aryl group, a group represented by -C(=O)-CR³₃, or a monovalent organic group having a reactive group, provided that a plurality of R¹'s may be the same or different from each other,
R² represents a hydrogen atom or an alkyl group, provided that a plurality of R²'s may be the same or different from each other,
R³ represents a hydrogen atom, a methyl group, or an ethyl group, provided that a plurality of R³'s may be the same or different from each other,
the monovalent organic group may be substituted with a halogen atom, a hydroxy group, an alkoxy group, an aryloxy group, an aralkyloxy group, or an oxy group,
the alkyl group, the alkenyl group, the alkynyl group, the aralkyl group, and the aryl group may have a substituent, and
a, b, d, and e each independently represent 0 or more and 1 or less, c represents more than 0 and 1 or less, and a + b + c + d + e = 1).

2. The fixing device according to claim 1,
wherein a coefficient µ1 of dynamic friction between a surface of the heating roll and a surface of paper on a side on which a toner image is fixed and a coefficient µ2 of dynamic friction between a back surface of the paper and an outer peripheral surface of the pressurizing belt satisfy a relationship of µ1 > µ2.

3. The fixing device according to claim 2,
wherein a difference Δµ (µ1 - µ2) between the coefficient µ1 of dynamic friction and the coefficient µ2 of dynamic friction is 0.1 or more and 1.0 or less.

4. A fixing device comprising:
a heating roll;
a pressurizing belt that is disposed in contact with the heating roll and has a surface layer that is a cured product of a composition containing a silsesquioxane compound;
a pressing member that is disposed on an inner peripheral surface of the pressurizing belt and presses the pressurizing belt against the heating roll from the inner peripheral surface of the pressurizing belt;
a sliding member that is interposed between the inner peripheral surface of the pressurizing belt and the pressing member; and
a lubricant that is interposed between the inner peripheral surface of the pressurizing belt and the sliding member,
wherein a coefficient µ1 of dynamic friction between a surface of the heating roll and a surface of paper on a side on which a toner image is fixed and a coefficient µ2 of dynamic friction between a back surface of the paper and an outer peripheral surface of the pressurizing belt satisfy a relationship of µ1 > µ2.

5. The fixing device according to claim 3 or 4,
wherein a difference Δµ (µ1 - µ2) between the coefficient µ1 of dynamic friction and the coefficient µ2 of dynamic friction is 0.20 or more and 0.8 or less.

6. The fixing device according to claim 5,
wherein the difference Δµ (µ1 - µ2) between the coefficient µ1 of dynamic friction and the coefficient µ2 of dynamic friction is 0.30 or more and 0.60 or less.

7. The fixing device according to any one of claims 2 to 6,
wherein the coefficient µ1 of dynamic friction is 0.4 or more and 0.9 or less.

8. The fixing device according to any one of claims 2 to 7,
wherein the coefficient µ2 of dynamic friction is 0.1 or more and 0.7 or less.

9. The fixing device according to any one of claims 4 to 8,
wherein the silsesquioxane compound includes a compound represented by Formula 1,
(R¹₃SiO_{1/2})ₐ(R¹₂SiO_{2/2})_{b}(R¹SiO_{3/2})_{c}(SiO_{4/2})_{d}(R²O_{1/2})ₑ Formula 1,
(in Formula 1,
R¹ represents a hydrogen atom, an alkyl group, an alkenyl group, an alkynyl group, an aralkyl group, an aryl group, a group represented by -C(=O)-CR³₃, or a monovalent organic group having a reactive group, provided that a plurality of R¹'s may be the same or different from each other,
R² represents a hydrogen atom or an alkyl group, provided that a plurality of R²'s may be the same or different from each other,
R³ represents a hydrogen atom, a methyl group, or an ethyl group, provided that a plurality of R³'s may be the same or different from each other,
the monovalent organic group may be substituted with a halogen atom, a hydroxy group, an alkoxy group, an aryloxy group, an aralkyloxy group, or an oxy group,
the alkyl group, the alkenyl group, the alkynyl group, the aralkyl group, and the aryl group may have a substituent, and
a, b, d, and e each independently represent 0 or more and 1 or less, c represents more than 0 and 1 or less, and a + b + c + d + e = 1).

10. The fixing device according to any one of claims 1 to 9,
wherein a tensile elastic modulus of the surface layer of the pressurizing belt at 150°C is 100 Mpa or more.

11. The fixing device according to any one of claims 1 to 10,
wherein a tensile elastic modulus of the surface layer of the pressurizing belt at 150°C is 1,000 Mpa or more and 3,500 Mpa or less.

12. The fixing device according to any one of claims 1 to 11,
wherein a surface roughness Ra of the surface layer of the pressurizing belt is 0.90 µm or less.

13. An image forming apparatus comprising:
an image holder;
a charging device that charges a surface of the image holder;
an electrostatic latent image forming device that forms an electrostatic latent image on the charged surface of the image holder;
a developing device that accommodates a developer containing a toner and develops the electrostatic latent image formed on the surface of the image holder with the developer to form a toner image;
a transfer device that transfers the toner image onto a surface of a recording medium; and
the fixing device according to any one of claims 1 to 12, that fixes the toner image on the surface of the recording medium.
